# EUROPEAN PATENT APPLICATION

(11) **EP 3 730 588 A1**
(43) Date of publication of application: **28.10.2020**
(21) Application number: 19305523.3
(22) Date of filing: 23.04.2019
(51) Int. Cl.: C09K 11/06

(54) **LUMINESCENT MATERIAL MADE OF A POLYMER-MATRIX COMPRISING LUMINESCENT ORGANIC COMPOUND AND LUMINESCENT METAL CLUSTERS**

(71) Applicant: Université de Rennes 1, 35000 Rennes (FR); CENTRE NATIONAL DE LA RECHERCHE SCIENTIFIQUE -CNRS-, 75016 Paris (FR); Ecole Nationale Supérieure de Chimie de Rennes, 35708 Rennes Cedex 7 (FR); Institut National des Sciences Appliquées de Rennes, 35708 Rennes Cedex 7 (FR)
(72) Inventor: SOUMAYA, Khlifi, 35510 Cesson-Sévigné (FR); MOLARD, Yann, 35690 ACIGNE (FR); ACHARD, Mathieu, 35230 ORGERES (FR); AMELA-CORTES, Maria, 35690 ACIGNE (FR)
(74) Representative: Plasseraud IP

(57) **Abstract**

The present invention concerns a dual emitting hybrid organic-inorganic material. More particularly it relates to a luminescent material made of a polymer-matrix comprising a luminescent organic compounds and luminescent metal cluster compounds.

## Description

The present invention relates to a material comprising a polymer matrix, an organic emitter and an inorganic phosphorescent emitter, wherein both emitters are embedded within the polymer matrix.

Stimuli responsive emissive materials have drawn an increasing attention for their potential in applications like sensors, lightning, optoelectronic or information storage. They are able to react to one or several external stimuli, such as a chemical or vapor exposure, a mechanical or electrical stress, a light irradiation, or a thermal treatment. Light is an easy to use external stimulus and, for this reason, luminescence that is a straightforward responsive signal, is a useful tool that can be integrated in the design of responsive materials offering potential applications in optoelectronic devices, data recording and storage, security and counterfeiting, etc. Stability and reversibility of the material response is in many cases an important issue that needs to be carefully considered to target applications. Materials able to store data for a prescribed period of time are also needed for secure communications. These materials, when rewritable, could help to lower the ecological impact of the traditional paper industry from the production to the recycling.

Although security inks that allow thermal rewriting of invisible printed images have already been described, there is still a need for printable hybrid material able to withstand cost effective and ecofriendly writing-erasing cycles.

The inventors of the present invention had already worked on emissive materials made of a polymer matrix with high content of metal cluster compounds in particular octahedral transition metal cluster compounds, see for instance EP 2 754 706.

The inventors of the present invention have now developed a new dual emissive materials answering to oxygen concentration with the same light stimulus for writing and reading.

More particularly they have developed a new self-erasable material in which the writing and erasing processes are controlled by the dynamic quenching of an energy transfer from an organic emitter and an inorganic phosphorescent emitter by triplet oxygen coming from air. Both emitters are homogeneously embedded in a polymer matrix. When exposed to ultraviolet (UV) light, the hybrid film switches its emission color from white to red depending on the irradiation power, the exposure time and the gas permeability of the polymer host. This switch is governed by the local oxygen concentration that drops down when triplet oxygen O₂ reacts with excited triplet states of emitters to generate the reactive singlet oxygen O₂. Data are only readable under UV light and can gradually self-erase when the polymer host shows a low gas permeability. The erasure times are controlled by exposure to UV light during the writing processes and can also be thermally accelerated.

Compared to a simple combination of emitters which would always emit the same color, the present technology involves oxygen to tailor the inter-emitters interactions and thus the emission color.

The present invention thus relates to a material comprising a polymer matrix functionalized with:
- an organic compound comprising a moiety of formula 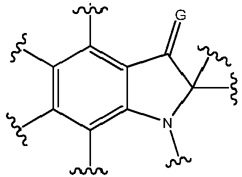 wherein G is
   - oxygen;
   - sulfur;
   - NR^{a}, N⁽⁺⁾R^{a}R^{b} with R^{a} and R^{b} are each independently H, C₁-C₁₈ alkyl, aryl or heteroaryl;
   - CH-(EWG) C-(EWG)₂ or (EWG¹)-C-(EWG²) with EWG, EWG¹, EWG² being an electron withdrawing group;
   - preferably oxygen;
- and a metal cluster compound comprising a moiety of formula, an anion of formula [M₆Qⁱ₈L₆]^{d-}
   wherein:
   - M represents molybdenum (Mo), tungsten (W), rhenium (Re), or a mixture thereof, preferably Mo or W;
   - Qⁱ is an inner ligand and represents a halogen or a chalcogen atom, preferably a halogen atom, or a mixture thereof; and
   - L^{a} is an apical ligand and represents a halogen atom, an organic ligand or a mixture thereof;
   - d ranges from -4 to + 4, preferably 2 to 4, more preferably 2.

The present invention also relates to the use of the material for data recording, data storage, anticounterfeiting, sensing, optoelectronics or theranostic applications. In particular the present invention relates to the use of the material in appliances selected from the group of display devices, polymeric matrix flat screens, LCD screens, photovoltaic cells, temperature detectors, gas sensors, pressure sensors, electroluminescent diodes, LASERs, active waveguides, and field effect transistors.

### Definitions:

In the present invention the expression "a polymer matrix functionalized with" means the organic compound and metal cluster compound can be independently:
- Linked to the polymer matrix by
   - Covalent bond
   - Electrostatic interaction
   - Supramolecular interaction
   - Complexation / adsorption
- and/ or can be dispersed within the polymer matrix (admixture/ embedded)

In one embodiment the organic compound is linked to the polymer matrix by covalent bond.

In another embodiment the organic compound is dispersed with the polymer matrix.

In another embodiment the metal cluster compound is linked to the polymer matrix by covalent bond.

In still another embodiment, the metal cluster compound is linked to the polymer matrix by supramolecular interaction or complexation.

The expression "Electron withdrawing group" or EWG represents any group having an improved electron accepting capacity and electron transferring capacity. The electron withdrawing group is also referred to as an electron attracting group, and refers to an atomic group which draws electrons from surrounding atomic groups by a resonance effect or an inductive effect in electron theory. More particularly this electron withdrawing group (EWG) includes trihaloalkylsulfonyl group (-SO₂C(Halogen)₃), ammonium group (-NH₃⁺, -NH(alkyl)₂⁺, -N(alkyl)₃⁺, NH(aryl)₂⁺, -N(aryl)₃⁺, NH(alkyl)(aryl)⁺nitro group (-NO₂), haloformyl group (-CO(Halogen)), formyl group (-CHO), acyl group (-CO(alkyl)), carboxyl group (-COOH), alkoxycarbonyl group (-COO(alkyl)), aminocarbonyl groups (-CONH₂, -CONH(alkyl), -CON(alkyl)₂), halogroups, nitroso group (-N=O), aryl, heteroaryl (such as pyridinyl, pyridinium, pyrimidinyl, pyrimidinium, indolyl, indolinium, etc) and the like.

The term "halogen" or "halo" as used in the present invention refers to an atom of fluorine (F), chlorine (CI), bromine (Br), iodine (I), preferably F, Cl, Br or I.

The expression "amino" as used in the present invention refers -NH₂, -NH(alkyl) or -N(alkyl)₂) The expression "alkyl" represents any monovalent radical of a linear or branched hydrocarbon chain comprising 1 to 18 carbon atoms. The expression "C₃-C₁₈ alkyl" represents an alkyl group having 3 to 18 carbon atoms. The expression "C₆-C₇ alkyl" represents an alkyl group having 6 or 7 carbon atoms. Examples of C₁-C₁₈ alkyl groups include C₁-C₄ alkyl groups such as methyl, ethyl, *n*-propyl, *i*-propyl, *n*-butyl, i-butyl, s-butyl or *t*-butyl, C₆-C₈ alkyl groups such as *n*-hexyl, *n*-heptyl or *n*-octyl, as well as *n*-pentyl, 2-ethylhexyl, 3,5,5-trimethylhexyl, *n*-nonyl, *n*-decyl, *n*-undecyl, *n*-dodecyl or *n*-octadecyl.

The expression "aryl" represents any monovalent radical of an aromatic hydrocarbon comprising 6 to 18 carbon atoms. It represents a polyunsaturated aromatic hydrocarbyl containing one ring (i.e. phenyl), several fused rings (for example naphthyl) or several rings linked via a covalent bond (for example biphenyl), which typically contain 6 to 20, and preferentially 6 to 12, carbon atoms, and wherein at least one ring is aromatic. The aromatic ring may optionally comprise one to two additional fused rings (*i.e.* cycloalkyl, heterocycloalkyl or heteroaryl). Examples of C₆-C₁₈ aryl groups include phenyl, naphthyl, anthracenyl and phenanthrenyl.

The expression "heteroaryl" represents any monovalent radical of a monocyclic or bicyclic 5 to 10 membered aromatic group comprising from 1 to 3 heteroatoms independently selected from oxygen, nitrogen, phosphorus and sulfur. Examples of C₅-C₁₀ heteroaryl groups include furyl, thienyl, pyrrolyl, pyrazoyl, imidazolyl, isoxazolyl, isothiazoyl, thiazolyl, oxazolyl, 1,2,3-triazolyl, 1,2,4-triazolyl, 1-benzofuryl, 1-benzothienyl, indolyl, benzimidazolyl, indazolyl, 1,2-benzisoxazolyl, 2,1-benzisoxazolyl, 1,2-benzisothiazolyl, 2,1-benzisothiazolyl, benzothiazolyl, benzoxazolyl, benzotriazolyl, pyridyl, pyridinium, quinolinyl, quinolinium, isoquinolinyl, isoquinolinium, pyridazinyl, cinnolinyl, phthalazinyl, pyrimidinyl, quinazolinyl, pyrazinyl and quinoxalinyl.

The expression "cycloalkyl" represents any monovalent radical of a monocyclic or bicyclic 3 to 12 membered saturated carbocycle. Examples of C₃-C₁₂ cycloalkyl groups include cyclopropyl, cyclopentyl and cyclohexyl.

The expression "alkoxy" represents a radical of formula -OC₁-C₁₂ alkyl. Examples of C₁-C₁₂ alkoxy groups include C₁-C₆ alkoxy groups such as -OCH₃,-OCH₂CH₃ or -O(CH₂)₅CH₃.

The expression "haloalkyl" represents any C₁-C₁₂ alkyl group substituted by one or more halogen atom such as F or Cl. Examples of C₁-C₁₂ haloalkyl groups include C₁-C₁₂ perhaloalkyl groups, in particular C₁-C₄ perhaloalkyl groups such as trifluoromethyl (-CF₃), as well as C₁-C₁₂ (perhaloalkyl)alkyl groups, in particular (C₁-C₄ perhaloalkyl)-(C₁-C₄ alkyl) groups such as -CH₂CF₃.

The expression "haloalkoxy" represents a radical of formula -OC₁-C₁₂ haloalkyl. Examples of C₁-C₁₂ haloalkoxy include C₁-C₁₂ perhaloalkoxy groups, in particular C₁-C₄ perhaloalkoxy groups such as -OCF₃, as well as C₁-C₁₂ (perhaloalkyl)alkoxy groups, in particular (C₁-C₄ perhaloalkyl)-(C₁-C₄ alkoxy) groups such as -OCH₂CF₃.

The expression "perhaloalkyl"means an alkyl wherein all the hydrogen atoms are replaced by halogen atoms. Examples include trifluoromethyl.

The expression "alkylthio" represents a radical of formula -SC₁-C₁₂ alkyl. Examples of C₁-C₁₂ alkylthio groups include -SCH₃ and -SCH₂CH₃.

The expression "haloalkylthio" represents a radical of formula -S-C₁-C₁₂ haloalkyl. Examples of C₁-C₁₂ haloalkoxy groups include C₁-C₁₂ perhaloalkylthio groups, in particular C₁-C₄ perhaloalkylthio groups such as -SCF₃, as well as C₁-C₁₂ (perhaloalkyl)alkylthio groups, in particular (C₁-C₄ perhaloalkyl)-(C₁-C₄ alkylthio) groups such as -SCH₂CF₃.

The expression "perhaloalkylthio" means-S-perhaloalkyl.

The expression "alkenyl" or "alcenyl" as used in the present invention is a monovalent group -CₙH₂ₙ₋₁ formed from an alkene by removal of one hydrogen atoms from any carbon atom. It is an alkyl containing at least one carbon-carbon double bond. Examples include ethenyl, propenyls, butenyls, allyl, and the like.

The expression"alkynyl" is a univalent aliphatic hydrocarbon radical containing at least one carbon-carbon triple bond. Examples include ethynyl, propynyls, butynyls and the like.

The expression "acrylate group" means -O-C(=O)-CH=CH₂.

The expression "methacrylate group" means -O-C(=O)-C(CH₃)=CH₂.

The expression "aryloxy" as used in the present invention means Aryl-O-.

The expression "aralkyl" means any univalent radical derived from an alkyl radical by replacing one or more hydrogen atoms by aryl groups.

The expression "pyridinyl" represents any monovalent radical of a pyridine which is an aromatic group comprising 5 carbon atoms and 1 nitrogen atom.

The expression "pyrimidinyl" represents any monovalent radical of a pyrimidine which is an aromatic group comprising 4 carbon atoms and 2 nitrogen atoms.

The expression "indolyl" represents any monovalent radical of an indole, which is a six-membered benzene ring fused to a five-membered nitrogen-containing pyrrole ring.

The expression "linker" is any group connecting two moieties of a compound.

The expression "cycle" is a cyclic ether comprising 12 to 21 ring atoms at least 4 ethylene oxide units and optionally interrupted by one or more nitrogen atoms.

The expression "PEO" is a chain comprising at least 4 ethylene oxide units or chains and optionally interrupted by one or more nitrogen atoms.

The expression "ethylene oxide units or chains" is a chain comprising one or more ethylene oxide units of formula -(O-CH₂-CH₂)-.

The expression "Pol" is a polymerisable group that is able to react with the precursor of the polymer matrix. Depending on the polymer matrix chosen the person skilled in the art will know which polymerisable group Pol the organic compound and or the metal cluster compound should bear.

The polymerizable group Pol is typically a group comprising a function chosen from the group consisting of: carbon-carbon double bond, carbon-carbon triple bond, an azide function, a (meth)acrylate function, acrylate function, an amine function, a carboxylic function, an aldehyde function, a hydroxyl function, an alkoxy function, an iodine atom, a bromine atom and a chlorine atom; more preferably a function chosen from the group consisting of an acrylate function (-O-C(=O)-CH=CH₂), a methacrylate function (-O-C(=O)-C(CH₃)=CH₂), a carbon-carbon double bond and carbon-carbon triple bond.

Luminescence is emission of light by a substance not resulting from heat; this distinguishes luminescence from incandescence, which is light emitted by a substance as a result of heating. It is, thus, a form of cold body radiation. The energy of the electrons shifts upon excitation before going back to its base level. When the electrons return to their base level of energy, light is emitted. Fluorescence is luminescence wherein light emission occurs right after excitation, usually 10⁻⁹ to 10⁻⁶ s after the excitation. Phosphorescence is luminescence wherein light emission occurs after a longer lapse of time from the excitation, usually 10⁻⁶ to 10 s.

Definition of a metal cluster compound is given by F.A. Cotton in Inorg. Chem. 1964, 3, 1217 as: "a finite group of metal atoms that are held together mainly, or at least to a significant extent, by bonds directly between the metal atoms, even though some non-metal atoms may also be intimately associated with the cluster".

In the present invention, "metal cluster" is understood as 6 metal atoms which are covalently bound together and form metal-metal bonds. Metal-metal bonds enable delocalisation of all valence electrons on all metal atoms. The metal atoms of the metal cluster form a polyhedron. Each metal atom is considered as occupying a vertex (corner point) of the polyhedron.

The "metal cluster compound" comprises 8 face-capping ligands and/or edge bridging ligands, together referred as inner ligands.

A "ligand" is an ion or molecule that binds to the metal cluster to form a coordination complex. The bonding between the metal cluster and the ligand usually involves formal donation of one or more of the ligand's electron pairs.

"Face-capping ligands" are ligands that are located normally to the centre of one face of the polyhedron, *i.e.* the virtual line passing through the ligand and the centre of the face of the polyhedron is orthogonal to that very face.

"Edge-bridging ligands" are ligands that are located normally to the middle of a metal-metal bond, *i.e.* the virtual line passing through the ligand and the middle of the metal-metal bond is perpendicular to that very metal-metal bond.

The metal cluster compound of the present invention comprises 6 apical ligands.

"Apical ligands" are ligands located facing the vertexes of the polyhedron. The metal cluster and the inner ligands are referred together in the description as a "cluster core". The cluster core and the apical ligands are referred together as a "cluster unit" or "metal cluster unit".

The "cluster unit" or "metal cluster unit" has a negative charge, is anionic. Thus the metal cluster unit needs at least one counter cation. In other words, the metal cluster compound of the present invention comprises a metal cluster unit or metal cluster anion and at least one counter cation. Said counter cation can be either organic or inorganic.

Furthermore the term "metal cluster compound" as used in the present invention refers to a metal cluster compound as defined above having a nanometric size, preferably between about 0.5 nm to about 20 nm, more preferably between about 0.5 nm to about 2 nm.

The term "chalcogen" as used in the present invention refers to an atom of oxygen (O), sulphur (S), selenium (Se), tellurium (Te), polonium (Po) or livermorium (Lv), preferably O, S, Se or Te.

The term "organic ligand" as used in the present invention refers to an ion or a molecule that binds to a metal atom via a carbon, oxygen, nitrogen, sulphur or phosphorus atom. It can be notably CN, a carboxylate, SCN, NO₃, NO₂, C₅H₅N, NH₃, NH₂-(CH₂)₂-NH₂, NC₅H₄-C₅H₄N, P(C₆H₅)₃, O=P(C₆H₅)₃ or CO, particularly SCN, CN or a carboxylate, more particularly a carboxylate.

"Carboxylate" means, in the present invention, a group R^{d}-COO where R^{d} represents a C₁-C₆ alkyl group, notably a C₁-C₃ alkyl group, in which one or several hydrogen atoms each can be replaced by a fluorine atom. It can be in particular a perfluorinated C₁-C₆ alkyl group, notably a perfluorinated C₁-C₃ alkyl group, i.e. a C₁-C₃ alkyl group in which all the hydrogen atoms have been replaced with a fluorine atom, such as a C₂F₅COO or a C₃F₇COO group.

"Alkali metal" as used in the present invention refers to lithium (Li), sodium (Na), potassium (K), rubidium (Rb), caesium (Cs) or francium (Fr), preferably Cs, Na or K, more preferably Cs.

Unless mentioned otherwise, the groups and radicals defined hereinabove may be unsubstituted or substituted by one or more substituents such as, for example, halogen, alkyl, alkoxy, aryl, heteroaryl, haloalkyl, haloalkoxy, alkoxycarbonyl, alkanoyl, aroyl, formyl, nitrile, nitro, amido, alkylthio, alkylsulfinyl, alkylsulfonyl, arylthio, arylsulfinyl, arylsulfonyl, amino, alkylamino, arylamino, dialkylamino and diarylamino.

### Luminescent Material

The material according to the invention is a material comprising a polymer matrix functionalized with:
- an organic compound comprising a moiety of formula 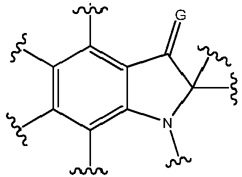 wherein G is :
   - oxygen,
   - sulfur,
   - NR^{a}, N⁽⁺⁾R^{a}R^{b} with R^{a} and R^{b} are each independently H, C₁-C₁₈ alkyl, or aryl or heteraoaryl,
   - CH-(EWG), C-(EWG)₂, (EWG¹)-C-(EWG²) with EWG, EWG¹ and EWG² being an electron withdrawing group,
- and a metal cluster compound comprising a moiety of formula, an anion of formula [M₆Qⁱ₈L^{a}_{6]}^{d-}
   wherein:
   - M represents molybdenum (Mo), tungsten (W), rhenium (Re), or a mixture thereof, preferably Mo or W;
   - Qⁱ is an inner ligand and represents a halogen or a chalcogen atom, preferably a halogen atom, or a mixture thereof; and
   - L^{a} is an apical ligand and represents a halogen atom, an organic ligand or a mixture thereof;
      - d ranges from -4 to + 4, preferably 2 to 4, more preferably 2.

The polymer matrix useful for the present invention functions as a support that can be easily printed or shaped, for example into films, fibers, bulk materials, etc. Suitable polymer matrix can be obtained by mixing one or more polymers, one or more monomers, or a mixture thereof and allowed to reticulate.

The polymer matrix useful for the present invention can be selected in the group consisting of polyamides, polycarbonates, polyolefins such as polyethylene, polyimides, polyacrylamides, poly(meth)acrylates such as polymethylmethacrylate (PMMA), styrenic polymers such as polystyrene, polyurethane, polyvinylchloride, polyester such as polyethylene naphtalate, polyethylene terephthalate, polylactic acid (PLA), poly(lactic-co-glycolic) acid (PLGA), polyacrylic acid, polyvinylalcohol, polyether such as polyethylene oxide (PEO), polyoxysilane such as polydimethylsiloxane (PDMS), cellulose ester such as cellulose acetate phthalate (CAP), alkylcellulose such as ethylcellulose and hydroxyalkylcellulose such as ethoxycellulose, preferably polymethylmethacrylate (PMMA) or polydimethylsiloxane (PDMS) or cellulose acetate phthalate (CAP), more preferably polymethylmethacrylate (PMMA).

The polymer matrix useful for the present invention can also be selected from the group consisting of PEO, crosslinked PEO-ureasil, crosslinked PEO-urethanesil, polymethylmethacrylate-poly(ethylene oxide) methacrylate (PMMA-PEOMA), polydimethylsiloxane-PEO (PDMS-PEO), polyvinylpyrrolidone-PEO (PVP-PEO), polyurethane-PEO (PU-PEO), polystyrene-PEO (PS-PEO), Polyethylene-PEO (PE-PEO) polyester-PEO (PES-PEO), polyamide-PEO, polycaprolactone-PEO, polyacrylamide-PEO, polylactic acid-PEO (PLA-PEO), Poly(lactic-co-glycolic)acid-PEO (PLGA-PEO) and mixtures thereof.

Due to the presence of a conjugated donor-accepted fragment, the organic compound useful for the present invention exhibits fluorescent properties, in particular strong fluorescence in water. Furthermore this organic compound is robust to photobleaching and ideally arising from an oxidation reaction.

The term "photobleaching" (or fading) is the photochemical alteration of a dye or a fluorophore molecule such that it permanently is unable to fluoresce.

According to a preferred embodiment of the present invention the organic compound useful for the present invention is a 3-oxindole (i.e wherein G = oxygen).

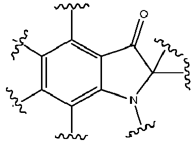

Examples of 3-oxindoles particularly useful for the present are allylated 3-oxindoles as follows:

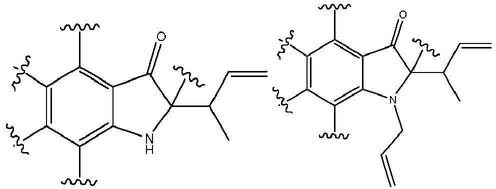

These organic compounds are typically a blue green emitters and can advantageously being prepared according to the procedure reported in Hortense Lauwick, Yang Sun, Huriye Akdas-Kilig, Sylvien Dérien, and Mathieu Achard, Chem Eur. J, 2018, 24, 7964-7969.

Other examples of organic compounds useful for the present invention include compounds wherein CH-(EWG), C-(EWG)₂, (EWG¹)-C-(EWG²) with EWG, EWG¹ and EWG² being an electron withdrawing group (such as nitrile (-C≡N); ketone (-(C=O)-R^{c}) or ester (-(C=O)-OR^{c}) wherein R^{c} is independently H, C₁-C₁₈ alkyl, aryl or heteroaryl (such as pyridinyl, pyrimidinyl); aryl or heteroaryl):

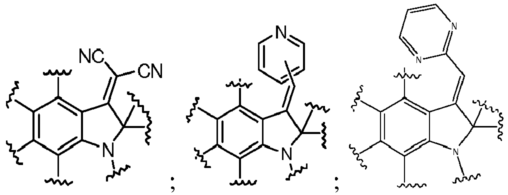

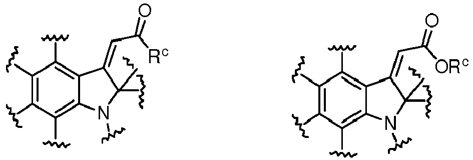

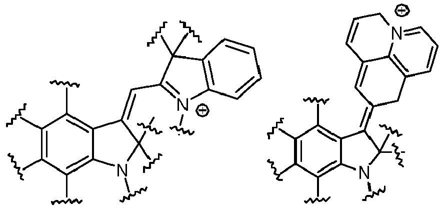

The metal cluster compound useful for the present invention shows an octahedral transition metal cluster unit. It is a robust phosphorescent emitter, in particular a red to near infra-red phosphorescent emitter. In a particular embodiment of the present invention, the metal cluster compound comprises an anion, a moiety of the general formula [M₆Qⁱ₈L^{a}₆]^{d-} wherein:
- M represents molybdenum (Mo), tungsten (W), rhenium (Re), or a mixture thereof,;
- Q' represents Cl, Br, I, S, Se or a mixture thereof,; and
- L^{a} represents Cl, Br, I, CN, SCN, a carboxylate or a mixture thereof..

Advantageously, the metal cluster compound of the present invention comprises an anion, a moiety of the general formula [M₆Qⁱ₈L^{a}₆]^{d-} wherein:
- M represents Mo or W, preferably Mo;
- Q' represents Cl, Br or I; and
- L^{a} represents Cl, Br, I, a C₃F₇COO or a C₂F₅COO group.

As specified above, the organic compound and metal cluster compound can be independently:
- Linked to the polymer matrix by
   - Covalent bond
   - Electrostatic interaction
   - Supramolecular interaction
   - Complexation / adsorption
- and/ or can be dispersed within the polymer matrix (admixture/ embedded)

According to the invention, the organic compound can be linked to the polymer matrix by covalent bond or the organic compound is dispersed with the polymer matrix.

Still according to the invention, the metal cluster compound is linked to the polymer matrix by covalent bond or the metal cluster compound is linked to the polymer matrix by supramolecular interaction or complexation.

As specified above the metal cluster compound of the present invention comprises an anion, a metal cluster unit and a counter cation so that metal cluster is roughly electrically neutral. Said counter cation can be organic or inorganic. The organic cation can enable the good integration of the metal cluster compound in the polymer matrix, to avoid phase segregation.

In most embodiments of the present invention the material according to the invention, the luminescent material, is soluble and whatever the embodiments of the present invention said luminescent material remains easily processable (by dipcoating, spin-coating, drop-casting, printing etc).

### First embodiment of the present invention

In a first embodiment of the present invention the material is obtained by polymerizing the organic compound, the metal cluster compound and a precursor of the polymer matrix, the metal cluster and the organic compound being copolymerized with the precursor of the polymer matrix.

In this particular first embodiment, the organic compound or the organic emitter comprises at least one polymerisable group Pol that is able to react with the precursor of the polymer matrix. The organic compound is represented by formula: 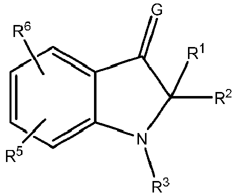 wherein:
G is as defined above,
R¹ and R² are each independently selected from alkyl, aryl, alkenyl (such as allyl), alkynyl (such as propargyl), -O-C(=O)-CH=CH₂, -O-C(=O)-C(CH₃)=CH₂, and -L-Pol,
R¹ and R² may form together a cycloalkyl,
R³ is selected from H, alkyl, -C=Oalkyl, C=Oaryl, -CO₂alkyl, CO₂aryl,-SO₂alkyl, -SO₂aryl, alkenyl, alkynyl (such as propargyl),-O-C(=O)-CH=CH₂,-O-C(=O)-C(CH₃)=CH₂,-L-Pol and -SiY¹Y²Y³ wherein Y¹, Y² and Y³ are each independently selected from H, alkyl, alkoxy, cycloalkyl, aryl, aryloxy and aralkyl (for example -SiY¹Y²Y³ is -Si(CH₃)₃),
R⁵ and R⁶ represent each independently H, alkyl, aryl, heteroaryl, hydroxyl, amino, halo, haloalkyl (such as trifluoromethyl), haloalkylthio (such as perhaloalkylthio groups such as trifluoromethylthiolate -SCF₃), -O-C(=O)-CH=CH₂, -O-C(=O)-C(CH₃)=CH₂ or-L-Pol,
With the proviso that at least one of R¹, R², R³, R⁵ or R⁶ is -L-Pol, L being a linker having from 1 to 30 methylene groups optionally interrupted by one of more atoms or groups of atoms chosen from the group consisting of aromatic rings, -O-, -CO-, -S-, -CH=CH-, -C ≡ C-, -COO-, -OC(O)-, -CH=N-, -C(O)NH,-N=N-, -NH-CO- and mixtures thereof, Pol being a polymerizable group.

Depending on the polymer matrix chosen the person skilled in the art will know which polymerisable group Pol the organic compound should bear. For instance for polyacrylate or PolyMethylMethacrylate (PMMA) as polymer matrix, the organic compound will have to bear acrylate or methacrylate functions or groups. For PolyDiMethylSiloxane (PDMS) as polymer matrix, the organic compound will have to bear either alkenyl functions or groups, hydroxysilane group, trialkoxysilane group, or silane group (silicium hydride). For polyurethane (PU) as polymer matrix, the organic compound will have to bear alcohol functions or groups, amine function, isocyanate function.

The preparation of such organic compound is well known by the person skilled in the art. For example it can be prepared as reported in Hortense Lauwick, Yang Sun, Huriye Akdas-Kilig, Sylvien Dérien, and Mathieu Achard, Chem Eur. J, 2018, 24, 7964-7969

In this particular first embodiment, the metal cluster compound or the inorganic phosphorescent emitter also comprises at least one polymerisable group Pol that is able to react with the precursor of the polymer matrix. The metal cluster compound in this particular embodiment has an organic counter cation, said organic counter cation containing a cationic head substituted by at least one substituent including at least one a polymerizable group Pol.

The metal cluster compound in this particular embodiment is represented by formula X⁺_{d}[M₆Qⁱ₈L^{a}₆]^{d-} wherein [M₆Qⁱ₈L^{a}₆]^{d-} is as defined above and X is an organic counter cation, said organic counter cation containing a cationic head substituted by at least one substituent including a polymerizable group and having the following formula (L1)ₘ₋Cat-(L2)ₙ-Pol,
wherein
L1 and L2 are each independently linkers having from 1 to 30 methylene groups, optionally interrupted by one of more atoms or groups of atoms chosen from the group consisting of aromatic rings, -O-, -CO-, -S-, -CH=CH-, -C ≡ C-, -COO-, -OC(O)-, -CH=N-, -C(O)NH, -N=N-, -NH-CO- and mixtures thereof m and n independently 0 or 1,
Cat represents a cationic head and is chosen from the group consisting of an imidazolium, a pyridinium, a pyrolidinium, an ammonium, a phosphonium, a hydroxyphosphonium and a sulfonium, preferably an ammonium,
Pol is a polymerizable group.

Such metal cluster compound having an organic counter cation containing a cationic head substituted by at least one substituent including a polymerizable group can for example be prepared as disclosed in Amela-Cortes, Y. Molard, S. Paofai, A. Desert, J.-L. Duvail, N. G. Naumov and S. Cordier, Dalton Trans., 2016, 45, 237-245 or in application EP 2 754 706.

The precursor of the polymer matrix of this first embodiment is for example a precursor of a polymer selected in the group consisting of polyamides, polycarbonates, polyolefins such as polyethylene, polyimides, polyacrylamides (PAM), poly(meth)acrylates such as polymethylmethacrylate (PMMA), styrenic polymers such as polystyrene, polyurethane, polyvinylchloride, polyester such as polyethylene naphtalate, polyethylene terephthalate and polylactic acid (PLA), poly(lactic-co-glycolic)acid (PLGA), polyacrylic acid, polyvinylalcohol, polyether such as polyethylene oxide (PEO), polyoxysilane such as polydimethylsiloxane (PDMS), cellulose ester such as cellulose acetate phthalate (CAP), alkylcellulose such as ethylcellulose, hydroxyalkylcellulose such as hydroxyethylcellulose.

In this particular embodiment the polymer matrix is preferably polymethylmethacrylate (PMMA) or polydimethylsiloxane (PDMS).

PMMA with a triplet energy of 3.1 eV is indeed a suitable wide band gap host material that does not disturb infrared or visible triplet states emitters. The same applies to polydimethylsiloxane (PDMS).

In this particular embodiment, interactions between the organic compound or the metal cluster compound and the polymer matrix are insured by covalent bonds.

### Second embodiment of the present invention

According to a second embodiment of the present invention, the material is obtained by:
(i) polymerizing a precursor of the polymer matrix and the organic compound in a solvent containing the dissolved metal cluster compound and evaporating the solvent; or
(ii) polymerizing a precursor of the polymer matrix and the organic compound, dipping said resulting polymer in a solvent containing the dissolved metal cluster compound and evaporating the solvent;
the organic compound being copolymerized with the precursor of the polymer matrix.

In this second embodiment, the precursor of the polymer matrix is a precursor of a linear or branched polymer or copolymer containing one or several poly(ethylene oxide) (PEO) chains, said polymer or copolymer being optionally crosslinked and each PEO chain having at least 4 ethylene oxide monomer units.

The polymer or copolymer contains at least 4, notably between 4 to 200 ethylene oxide (EO) monomer units, in particular between 6 and 150 ethylene oxide (EO) monomers or between 6 and 100 ethylene oxide (EO) monomers.

Beside the one or several poly(ethylene oxide) (PEO) chains, the copolymer may include one or several polymer chains chosen from the group consisting of polyamide, polycarbonate, polyethylene (PE), polyethylene naphthalate (PEN), polyethylene terephthalate (PET), polyimide, polyacrylate (PAM), polymethylmethacrylate (PMMA), polystyrene (PS), polyurethane, polycarbamate, polyester, polydimethylsiloxane (PDMS), polyacrylic acid (PA), polyurethane (PU) polyvinylpyrrolidone (PVP), polyacrylamide (PAM), alkyde, polycaprolactone, polyvinylalcohol, polylactic acid (PLA), poly(lactic-co-glycolic) acid PLGA, and a mixture thereof.

The polymer or copolymer also can comprise crosslinkable monomer units so as to be crosslinked. Said crosslinkable monomer units can be an ureasil or urethanesil group. Such Ureasil-PEO polymer matrix can be synthetized according to J. Sol-Gel Sci. Technol., 2014, 70:317.

The polymer-matrix can comprise, notably can consist in, a linear or branched copolymer containing one or several poly(ethylene oxide) (PEO) chains that are part of the backbone chain of the copolymer.

According to this second embodiment, the polymer or copolymer can advantageously be selected from the group consisting of group consisting of PEO, crosslinked PEO-ureasil, crosslinked PEO-urethanesil, polymethylmethacrylate-poly(ethylene oxide) methacrylate (PMMA-PEOMA), polydimethylsiloxane-PEO (PDMS-PEO), polyvinylpyrrolidone-PEO (PVP-PEO), polyurethane-PEO (PU-PEO), polystyrene-PEO (PS-PEO), Polyethylene-PEO (PE-PEO) polyester-PEO (PES-PEO), polyamide-PEO, polycaprolactone-PEO, polyacrylamide-PEO, polylactic acid-PEO (PLA-PEO), Poly(lactic-co-glycolic)acid-PEO (PLGA-PEO), and mixtures thereof.

The preparation of such polymer or copolymer is well known by the person skilled in the art. For example such polymer or copolymer can be prepared as described in M. Robin, N. Dumait, M. Amela-Cortes, C. Roiland, M. Harnois, E. Jacques, H. Folliot and Y. Molard, Chem. Eur. J., 2018, 24, 4825-4829.

According to this second embodiment, the organic compound is as defined in the first embodiment. Thus the organic compound comprises at least one polymerisable group Pol that is able to react with the precursor of the polymer matrix and is represented by the formula: 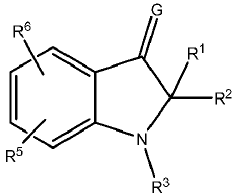
G is as defined above,
R¹ and R² are each independently selected from alkyl, aryl, alkenyl, alkynyl (such as propargyl), -O-C(=O)-CH=CH₂, -O-C(=O)-C(CH₃)=CH₂ and -L-Pol,
R¹ and R² may form together a cycloalkyl,
R³ is selected from H, alkyl, -C=Oalkyl, C=Oaryl, -CO₂alkyl, CO₂aryl,-SO₂alkyl, -SO₂aryl, alkenyl, alkynyl (such as propargyl), -O-C(=O)-CH=CH₂,-O-C(=O)-C(CH₃)=CH₂, -L-Pol and -SiY¹Y²Y³ wherein Y¹, Y² and Y³ are each independently selected from H, alkyl, alkoxy, cycloalkyl, aryl, aryloxy and aralkyl (for example -SiY¹Y²Y³ is -Si(CH₃)₃)
R⁵ and R⁶ represent each independently H, alkyl, aryl, heteroaryl, hydroxyl, amino, halo, haloalkyl (such as trifluoromethyl), haloalkylthio (such as perhaloalkylthio groups such as trifluoromethylthiolate -SCF₃), -O-C(=O)-CH=CH₂, -O-C(=O)-C(CH₃)=CH₂ or -L-Pol,

With the proviso that at least one R¹, R², R³, R⁵ or R⁶ is L-Pol, L being a linker having from 1 to 30 methylene groups optionally interrupted by one of more atoms or groups of atoms chosen from the group consisting of aromatic rings, -O-, -CO-, -S-,-CH=CH-, -C ≡ C-, -COO-, -OC(O)-, -CH=N-, -C(O)NH, -N=N-, -NH-CO- and mixtures thereof, Pol being a polymerizable group which reacts with the precursor of the polymer matrix.

The metal cluster compound useful for this second embodiment is represented by formula X⁺_{d}[M₆Qⁱ₈L^{a}₆]^{d-} wherein [M₆Qⁱ₈L^{a}₆]^{d-} is as defined above and X is a counter cation chosen from the group consisting of alkali metal cation, hydronium, and an ammonium, preferably chosen between Cs, K, Na, Li, H₃O, (nC₄H₉)₄N and NH₄, more preferably Cs.

Advantageously the metal cluster for this specific embodiment is selected from the group consisting of Cs₂Mo₆Br₁₄, Cs₂Mo₆Cl₁₄, Cs₂Mo₆I₁₄, Cs₂Mo₆Br₈Cl₆, Cs₂Mo₆I₈(OCOC₂F₅)₆, Cs₂Mo₆I₈(OCOC₃F₇)₆, (NH₄)₂Mo₆Br₈SCN₆, K₂Mo₆Cl₁₄, Cs₂W₆I₁₄, (H₃O)₂Mo₆Cl₁₄, (H₃O)W₆Cl₁₄ with X chosen from the group alkali metal, hydronium and ammonium.

The preparation of such metal compound is well known by the person skilled in the art. For example, the ternary salts Cs₂Mo₆Cl₁₄, Cs₂Mo₆Br₈Cl₆, Cs₂Mo₆Br₈I₆, Cs₂Mo₆I₁₄ can be prepared according to Prévôt et al. J. Mater. Chem. C 2015, 3, 5152. The ternary salt Cs₂Mo₆I₈(OCOC₃F₇)₆ can be prepared according to Prévôt et al. Adv. Funct. Mater. 2015, 25, 4966-4975. The ternary salt Cs₂Mo₆I₈(OCOC₂F₅)₆ can be prepared according to the procedure described in Dalton Trans., 2016, 45, 237. The ternary salt Cs₂W₆I₄ can be prepared according to Hummel et al. Eur. J. Inorg. Chem. 2016, 5063-5067. The ternary salt K₂Mo₆Cl₁₄ can be prepared according to Lindler et al., Z. Anorg. Allg. Chem., 1923, 130, 209-228. The ternary salt (H₃O)₂Mo₆Cl₁₄ can be prepared according to Sheldon et al., J. Chem. Soc., 1960, 1007-1014. The ternary salt (H₃O)₂W₆Cl₁₄ can be prepared according to Schafer et al., Monatsh. Chem. 1971, 102, 1293-1304.

In this second embodiment, interactions between the organic compound and the polymer matrix are insured by covalent bonds while interactions between the cluster compound and the polymer are insured by supramolecular interactions occuring between the cations of the metal cluster compound and the PEO chains of the polymer.

### Third embodiment of the present invention

According to a third embodiment of the present invention, the material is obtained by:
(i) polymerizing a precursor of the polymer matrix in a solvent containing the dissolved organic compound and metal cluster compound, and evaporating the solvent; or
(ii) polymerizing a precursor of the polymer matrix, dipping the resulting polymer in a solvent containing the dissolved organic compound and metal cluster compound and evaporating the solvent.

In this third embodiment the organic compound does not need to show a polymerizable group that is able to react/ polymerize/ create a covalent bound with the precursor of the polymer matrix. The organic compound useful in this third embodiment is represented by formula 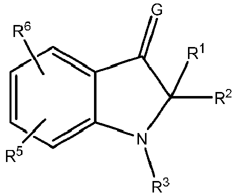
G is as defined above,
R¹ and R² are each independently selected from alkyl, aryl, alkenyl, alkynyl (such as propargyl), -O-C(=O)-CH=CH₂, -O-C(=O)-C(CH₃)=CH₂,
R¹ and R² may form together a cycloalkyl,
R³ is selected from H, alkyl, -C=Oalkyl, C=Oaryl, -CO₂alkyl, CO₂aryl,-SO₂alkyl, -SO₂aryl, alkenyl, alkynyl (such as propargyl), -O-C(=O)-CH=CH₂,-O-C(=O)-C(CH₃)=CH₂ and -SiY¹Y²Y³ wherein Y¹, Y² and Y³ are each independently selected from H, alkyl, alkoxy, cycloalkyl, aryl, aryloxy and aralkyl (for example -SiY¹Y²Y³ is -Si(CH₃)₃)
R⁵ and R⁶ represent each independently H, alkyl, aryl, heteroaryl, hydroxyl, amino, halo, haloalkyl (such as trifluoromethyl), haloalkylthio (such as perhaloalkylthio groups such as trifluoromethylthiolate -SCF₃), -O-C(=O)-CH=CH₂, -O-C(=O)-C(CH₃)=CH₂.

The metal cluster compound useful for this third embodiment is the same as the one disclosed above for the second embodiment of the present invention. Thus the metal cluster compound useful for this third embodiment does not need to show a polymerizable group that is able to react/ polymerize/ create a covalent bound with the precursor of the polymer matrix. It is represented by formula X⁺d[M₆Qⁱ₈L^{a}₆]^{d-} wherein [M₆Qⁱ₈L^{a}₆]^{d-} is as defined above and X is a counter cation chosen from the group consisting of alkali metal cation, hydronium, and an ammonium, preferably chosen between Cs, K, Na, Li, H₃O, (nC₄H₉)₄N and NH₄, more preferably Cs.

The precursor of the polymer matrix useful for this third embodiment is a precursor of a linear or branched polymer or copolymer containing one or several poly(ethylene oxide) (PEO) chains, said polymer or copolymer being optionally crosslinked and each PEO chain having at least 4 ethylene oxide monomer units.

The polymer matrix useful for this third embodiment of the present invention can be selected from the group consisting of group consisting of PEO, crosslinked PEO-ureasil, crosslinked PEO-urethanesil, polymethylmethacrylate-poly(ethylene oxide) methacrylate (PMMA-PEOMA), polydimethylsiloxane-PEO (PDMS-PEO), polyvinylpyrrolidone-PEO (PVP-PEO), polyurethane-PEO (PU-PEO), polystyrene-PEO (PS-PEO), Polyethylene-PEO (PE-PEO) polyester-PEO (PES-PEO), polyamide-PEO, polycaprolactone-PEO, polyacrylamide-PEO, polylactic acid-PEO (PLA-PEO), Poly(lactic-co-glycolic)acid-PEO (PLGA-PEO), and mixtures thereof, preferably polymethylmethacrylate-poly(ethylene oxide) methacrylate (PMMA-PEOMA).

In this third embodiment, the organic compound is weakly bound to the polymer matrix by lipophilic-lipophilic interactions. The interactions between the cluster compound and the polymer are insured by supramolecular interactions occuring between the cations of the metal cluster compound and the PEO chains of the polymer.

### Fourth embodiment of the present invention

According to a fourth embodiment of the present invention, the material is obtained by:
(i) polymerizing a precursor of the polymer matrix and the metal cluster compound in a solvent containing the dissolved organic compound and evaporating the solvent; or
(ii) polymerizing a precursor of the polymer matrix and the metal cluster compound, dipping said resulting polymer in a solvent containing the dissolved organic compound and evaporating the solvent;
wherein the metal cluster compound is copolymerized with the precursor of the polymer matrix.

The organic compound useful for this fourth embodiment is the same as the one disclosed above for the third embodiment. Thus the organic compound useful for this fourth embodiment does not need to show a polymerizable group that is able to react/ polymerize/ create a covalent bound with the precursor of the polymer matrix. It is represented by formula 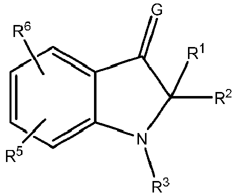
G is as defined above,
R¹ and R² are each independently selected from alkyl, aryl, alkenyl, alkynyl (such as propargyl), -O-C(=O)-CH=CH₂, -O-C(=O)-C(CH₃)=CH₂,
R¹ and R² may form together a cycloalkyl,
R³ is selected from H, alkyl, -C=Oalkyl, C=Oaryl, -CO₂alkyl, CO₂aryl,-SO₂alkyl, -SO₂aryl, alkenyl, alkynyl (such as propargyl), -O-C(=O)-CH=CH₂,-O-C(=O)-C(CH₃)=CH₂ and -SiY¹Y²Y³ wherein Y¹, Y² and Y³ are each independently selected from H, alkyl, alkoxy, cycloalkyl, aryl, aryloxy and aralkyl (for example -SiY¹Y²Y³ is-Si(CH₃)₃)
R⁵ and R⁶ represent each independently H, alkyl, aryl, heteroaryl, hydroxyl, amino, halo, haloalkyl (such as trifluoromethyl), haloalkylthio (such as perhaloalkylthio groups such as trifluoromethylthiolate -SCF₃), -O-C(=O)-CH=CH₂, -O-C(=O)-C(CH₃)=CH₂.

The metal cluster compound useful for this fourth embodiment is the same as the one disclosed above for the first embodiment. Thus the metal cluster compound is represented by formula X⁺_{d}[M₆Qⁱ₈L^{a}₆]^{d-} wherein [M₆Qⁱ₈L^{a}₆]^{d-} is as defined above and X is an organic counter cation containing a cationic head substituted by at least one substituent including a polymerizable group and having the following formula (L1)ₘ-Cat-(L2)ₙ-Pol
wherein
L1 and L2 are each independently linkers having from 1 to 30 methylene groups, optionally interrupted by one of more atoms or groups of atoms chosen from the group consisting of aromatic rings, -O-, -CO-, -S-, -CH=CH-, -C ≡ C-, -COO-, -OC(O)-, -CH=N-, -C(O)NH, -N=N-, -NH-CO- and mixtures thereof, m and n independently 0 or 1,
Cat represents a cationic head and is chosen from the group consisting of an imidazolium, a pyridinium, a pyrolidinium, an ammonium, a phosphonium, a hydroxyphosphonium and a sulfonium,
Pol is a polymerizable group.

The polymer matrix in this fourth embodiment can be selected in the group consisting of polyamides, polycarbonates, polyolefins such as polyethylene, polyimides, polyacrylamides, poly(meth)acrylates such as polymethylmethacrylate (PMMA), styrenic polymers such as polystyrene, polyurethane, polyvinylchloride, polyesters such as polyethylene naphtalate , polyethylene terephthalate, polylactic acid (PLA), poly(lactic-co-glycolic) acid (PLGA), polyacrylic acid, polyvinylalcohol, polyethers such as polyethylene oxide (PEO), polyoxysilanes such as polydimethylsiloxane (PDMS), preferably polymethylmethacrylate (PMMA) or polydimethylsiloxane (PDMS), more preferably polymethylmethacrylate (PMMA).

In this fourth embodiment, the organic compound is weakly bound to the polymer matrix by lipophilic-lipophilic interactions. Interactions between the metal cluster compound and the polymer matrix are insured by covalent bonds.

### Fifth embodiment of the present invention

According to a fifth embodiment of the present invention, the material is obtained by reacting the organic compound and the metal cluster compound to form a salt, and polymerizing a precursor of the polymer matrix and the salt in a solvent and evaporating the solvent.

The organic compound of this fifth embodiment is represented by formula: 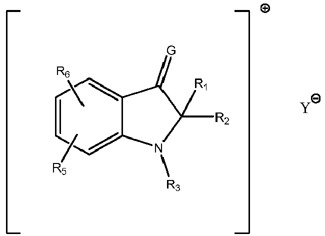 wherein:
G is as defined above,
R¹ and R² are each independently selected from alkyl, aryl, alkenyl, alkynyl (such as propargyl),-O-C(=O)-CH=CH₂, -O-C(=O)-C(CH₃)=CH₂, -(L3)ₚ-(Cat)ᵣ-(L4)_{q}-(Pol)ₛ,-(L3)ₚ-(Pol)ᵣ-(L4)_{q}-(Cat)ₛ,
R¹ and R² may form together a cycloalkyl,
R³ is selected from H, alkyl, -C=Oalkyl, C=Oaryl, -CO₂alkyl, CO₂aryl,-SO₂alkyl, -SO₂aryl, alkenyl, alkynyl (such as propargyl), -O-C(=O)-CH=CH₂,-O-C(=O)-C(CH₃)=CH₂, -(L3)ₚ-(Cat)ᵣ-(L4)_{q}-(Pol)ₛ, -(L3)ₚ-(Pol)ᵣ-(L4)_{q}-(Cat)ₛ and -SiY¹Y²Y³ wherein Y¹, Y² and Y³ are each independently selected from H, alkyl, alkoxy, cycloalkyl, aryl, aryloxy and aralkyl (for example -SiY¹Y²Y³ is-Si(CH₃)₃),
R⁵ and R⁶ represent each independently H, alkyl, aryl, heteroaryl, hydroxyl, amino, halo, haloalkyl (such as trifluoromethyl), haloalkylthio (such as perhaloalkylthio groups such as trifluoromethylthiolate -SCF₃), -O-C(=O)-CH=CH₂, -O-C(=O)-C(CH₃)=CH₂, -(L3)ₚ-(Cat)ᵣ-(L4)_{q}-(Pol)ₛ, -(L3)ₚ-(Pol)ᵣ-(L4)_{q}-(Cat)ₛ,
wherein
L3 and L4 are each independently linkers having from 1 to 30 methylene groups, optionally interrupted by one of more atoms or groups of atoms chosen from the group consisting of aromatic rings, -O-, -CO-, -S-, -CH=CH-, -C ≡ C-, -COO-, -OC(O)-, -CH=N-, -C(O)NH, -N=N-, -NH-CO- and mixtures thereof,
p and q independently 0 or 1,
Cat is a cationic group, preferably selected from imidazolium, a pyridinium, a pyrolidinium, an ammonium, a phosphonium, a hydroxyphosphonium and a sulfonium, Pol is a polymerisable group,
r and s independently 0 or 1,
With the proviso that at least one of R¹, R², R³, R⁵ or R⁶ is -(L3)ₚ-(Cat)ᵣ-(L4)_{q}-(Pol)ₛ, or -(L3)ₚ-(Pol)ᵣ-(L4)_{q}-(Cat)ₛ

The metal cluster compound of this fifth embodiment is the same as the one disclosed above for the second and third embodiments of the present invention. It is represented by formula X⁺_{d}[M₆Qⁱ₈L^{a}₆]^{d-} wherein [M₆Qⁱ₈L^{a}₆]^{d-} is as defined above and X is an counter cation chosen from the group consisting of alkali metal cation, hydronium, and an ammonium, preferably chosen between Cs, K, H₃O, (nC₄H₉)₄N and NH₄, more preferably Cs.

The salt of this fifth embodiment is represented by formula:

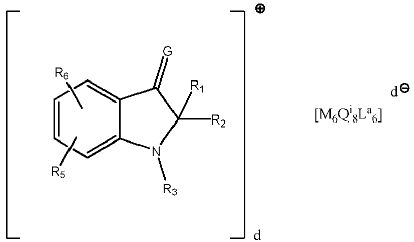

The polymer matrix in this fifth embodiment can be selected in the group consisting of polyamides, polycarbonates, polyolefins such as polyethylene, polyimides, polyacrylamides, poly(meth)acrylates such as polymethylmethacrylate (PMMA), styrenic polymers such as polystyrene, polyurethane, polyvinylchloride, polyesters such as polyethylene naphtalate , polyethylene terephthalate polylactic acid (PLA), poly(lactic-co-glycolic) acid (PLGA), polyvinylalcohol, polyethers such as polyethylene oxide (PEO) and polyoxysilanes such as polydimethylsiloxane (PDMS), preferably polymethylmethacrylate (PMMA) and polydimethylsiloxane (PDMS), more preferably polymethylmethacrylate (PMMA).

In this fifth embodiment, the organic compound is covalently bounded to the polymer backbone and acts as the metal cluster unit counter cation so that electrostatic interactions maintained the metal cluster unit in the organic matrix.

### Sixth embodiment of the present invention

According to a sixth embodiment of the present invention the material is obtained by:
(i) reacting the organic compound and the metal cluster compound to form a complex and polymerizing a precursor of the polymer matrix and the complex in a solvent and evaporating the solvent or
ii) polymerizing a precursor of the polymer matrix and the organic compound, dipping said resulting polymer in a solvent containing the dissolved metal cluster compound and evaporating the solvent
   wherein the organic compound is copolymerized with the precursor of the polymer matrix.

The organic compound useful for this sixth embodiment is represented by formula: 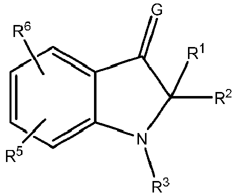 wherein:
G is as defined above,
R¹ and R² are each independently selected from alkyl, aryl, alkenyl, alkynyl (such as propargyl), -O-C(=O)-CH=CH₂, -O-C(=O)-C(CH₃)=CH₂, -L6-Pol, -L7-Cycle, -L8-PEO, -L9-PEO-L10- Pol, and -L11-Cycle-L12-Pol,
R¹ and R² may form together a cycloalkyl,
R³ is selected from H, alkyl, -C=Oalkyl, C=Oaryl, -CO₂alkyl, CO₂aryl,-SO₂alkyl, -SO₂aryl, alkenyl, alkynyl (such as propargyl), -O-C(=O)-CH=CH₂,-O-C(=O)-C(CH₃)=CH₂, -L6-Pol, -L7-Cycle, -L8-PEO, -L9-PEO-L10-Pol, -L11-Cycle-L12-Pol and -SiY¹Y²Y³ wherein Y¹, Y² and Y³ are each independently selected from H, alkyl, alkoxy, cycloalkyl, aryl, aryloxy and aralkyl (for example -SiY¹Y²Y³ is -Si(CH₃)₃),
R⁵ and R⁶ represent each independently H, alkyl, aryl, heteroaryl, hydroxyl, amino, halo, haloalkyl such as trifluoromethyl, haloalkylthio such as perhaloalkylthio groups such as trifluoromethylthiolate -SCF3, -O-C(=O)-CH=CH₂, -O-C(=O)-C(CH₃)=CH₂, -L6-Pol, -L7-Cycle, -L8-PEO, -L9-PEO-L10-Pol, or -L11-Cycle-L12-Pol,
L6, L7, L8, L9, L10, L11 and L12 are each independently linkers having from 1 to 30 methylene groups, optionally interrupted by one of more atoms or groups of atoms chosen from the group consisting of aromatic rings, -O-, -CO-, -S-,-CH=CH-, -C ≡ C-, -COO-, -OC(O)-, -CH=N-, -C(O)NH, -N=N-, -NH-CO- and mixtures thereof,
Cycle being a cyclic ether comprising 12 to 21 ring atoms at least 4 ethylene oxide units and optionally interrupted by one or more nitrogen atoms,
PEO being a chain comprising at least 4 ethylene oxide units and optionally interrupted by one or more nitrogen atoms,
And with the proviso that
   (i) at least one of R¹, R², R³, R⁵ or R⁶ is -L6-Pol and at least one of R¹, R², R³, R⁵ or R⁶ is -L7-Cycle or -L8-PEO
      or
   (ii) at least one of R¹, R², R³, R⁵ or R⁶ is -L9-PEO- L10- Pol, -L11-Cycle-L12-Pol

The metal cluster compound useful for this sixth embodiment is the same as the one disclosed above for the second, third and fifth embodiments of the present invention. It is represented by formula X⁺_{d}[M₆Qⁱ₈L^{a}₆]^{d-} wherein [M₆Qⁱ₈L^{a}₆]^{d-} is as defined above and X is a counter cation chosen from the group consisting of alkali metal cation, hydronium, and an ammonium, preferably chosen between Cs, Na, K, Li, H₃O, (nC₄H₉)₄N or NH₄, more preferably Cs.

The polymer matrix in this fifth embodiment can be selected in the group consisting of polyamides, polycarbonates, polyolefins such as polyethylene, polyimides, polyacrylamides, poly(meth)acrylates such as polymethylmethacrylate (PMMA), styrenic polymers such as polystyrene, polyurethane, polyvinylchloride, polyesters such as polyethylene naphtalate , polyethylene terephthalate, polylactic acid (PLA), poly(lactic-co-glycolic) acid (PLGA), polyvinylalcohol, polyethers such as polyethylene oxide (PEO) and polyoxysilanes such as polydimethylsiloxane (PDMS), preferably polymethylmethacrylate (PMMA) or polydimethylsiloxane (PDMS), more preferably polymethylmethacrylate (PMMA).

In this sixth embodiment, the organic compound is covalently bound to the polymer. Supramolecular interactions between the PEO chain of the organic compound and the metal cluster compound counter cation insure the homogeneous integration of the metal cluster compound in the organic matrix.

### Seventh embodiment of the present invention

According to a seventh embodiment the material is obtained by solubilizing in a solvent the polymer matrix, the organic compound and the metal cluster compound and evaporating the solvent. In this embodiment neither the organic compound nor the metal cluster compound need to show a polymerizable group able to react with the polymer matrix.

According to this seventh embodiment, the organic compound is the same as the one disclosed for the third embodiment. It is represented by formula 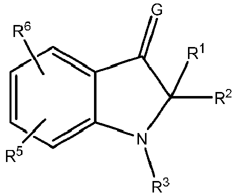
G is as defined above,
R¹ and R² are each independently selected from alkyl, aryl, alkenyl, alkynyl (such as propargyl), -O-C(=O)-CH=CH₂, -O-C(=O)-C(CH₃)=CH₂,
R¹ and R² may form together a cycloalkyl,
R³ is selected from H, alkyl, -C=Oalkyl, C=Oaryl, -CO₂alkyl, CO₂aryl,-SO₂alkyl, -SO₂aryl, alkenyl, alkynyl (such as propargyl), -O-C(=O)-CH=CH₂,-O-C(=O)-C(CH₃)=CH₂ and -SiY¹Y²Y³ wherein Y¹, Y² and Y³ are each independently selected from H, alkyl, alkoxy, cycloalkyl, aryl, aryloxy and aralkyl (for example -SiY¹Y²Y³ is -Si(CH₃)₃),
R⁵ and R⁶ represent each independently H, alkyl, aryl, heteroaryl, hydroxyl, amino, halo, haloalkyl (such as trifluoromethyl), haloalkylthio (such as perhaloalkylthio groups such as trifluoromethylthiolate -SCF₃), -O-C(=O)-CH=CH₂, -O-C(=O)-C(CH₃)=CH₂.

According to this seventh embodiment, the metal cluster compound is the same as the one disclosed above for the second, third, fifth and sixth embodiments of the present invention. It is represented by formula X⁺_{d}[M₆Qⁱ₈L^{a}₆]^{d-} wherein [M₆Qⁱ₈L^{a}₆]^{d-} is as defined above and X is a counter cation chosen from the group consisting of alkali metal cation, hydronium, and an ammonium, preferably chosen between Cs, Na, K, Li, H₃O, (nC₄H₉)₄N or NH₄, more preferably Cs.

The polymer matrix in this seventh embodiment can be selected in the group consisting of polyamides, polycarbonates, polyolefins such as polyethylene, polyimides, polyacrylamide, poly(meth)acrylates such as polymethylmethacrylate (PMMA), styrenic polymers such as polystyrene, polyurethane, polyvinylchloride, polyester such as polyethylene naphtalate, polyethylene terephthalate, polylactic acid (PLA), poly(lactic co-glycolic)acid (PLGA), polyvinylalcohol, polyethers such as polyethylene oxide (PEO), polyoxysilanes such as polydimethylsiloxane (PDMS), cellulose ester such as cellulose acetate phthalate (CAP), alkylcellulose such as ethylcellulose, and hydroxyalkylcellulose such as hydroxyethylcellulose, preferably polymethylmethacrylate (PMMA) or polydimethylsiloxane (PDMS) or cellulose acetate phthalate (CAP), more preferably polymethylmethacrylate (PMMA) or cellulose acetate phthalate (CAP) .

In this seventh embodiment, only weak interactions maintained the organic and metal cluster compound well dispersed in the host matrix.

As stipulated above, in most embodiments of the present invention the material according to the invention, the luminescent material, is soluble and whatever the embodiments said material remains easily processable (by dipcoating, spin-coating, drop-casting, printing etc). Any solvent able to solubilize the material can be used.

The luminescent material according to the present invention can be used for data recording, data storage, anticounterfeiting, sensing, optoelectronics or theranostic applications.

It can be used in appliances selected from the group of display devices, polymeric matrix flat screens, LCD screens, photovoltaic cells, temperature detectors, gas sensors, pressure sensors, electroluminescent diodes, LASERs, active waveguides, and field effect transistors.

More particularly, materials comprising PMMA or cellulose (CAP) matrix are very useful for data storage and anticounterfeiting since PMMA or cellulose (CAP) exhibit low gas permeability.

On the contrary materials comprising PDMS are very useful for gas sensing and anticounterfeiting since PDMS exhibits a rather high gas permeability (much higher than PMMA).

The present invention may be better understood with reference to the following example. These examples are intended to be representative of specific embodiments of the invention, and are not intended as limiting the scope of the invention.

### EXAMPLES:

¹H Nuclear Magnetic Resonance (NMR) experiments in solution were realized in deuterated acetone with a Bruker Ascend™ 500 MHz NMR spectrometer at 298 K. All signals were referenced to the methyl signals of TMS at δ= 0 ppm.

¹⁹F NMR experiments in solution were realized in deuterated acetone with a Bruker Ascend™ 400 MHz NMR spectrometer at 298 K operating at larmor frequency of 376 MHz

InfraRed (IR) spectra were recorded with a IR spectra were recorded with a FTIR ATR Perkin Elmer spectrum two spectrometer.

Energy Dispersive X-Ray Analysis (EDX), referred to as EDS or EDAX, is an X-ray technique used to identify the elemental composition of materials. It was performed on the CMEBA SCANMAT analysis platform with a JEOL JSM 7100 F EDS EBSD Oxford.

### Emission properties:

Luminescence spectra were recorded directly on thin polymer films with an ocean optic QE65000 photodetector mounted via an optical fiber on an optical microscope Nikon 80i. The excitation source is made of either a Nikon Intensilight equipped with optical filters to select the excitation wavelength with a bandwidth of 380-420 nm, or a 405 nm 5mW laser diode.

UV-vis absorption measurements were performed on a Varian Cary 5000 UV-Vis-NIR spectrophotometer.

The absolute quantum yields (AQY) were measured with a C9920-03 Hamamatsu system equipped with a 150 W xenon lamp, a monochromator, a Spectralon integrating sphere whose internal atmosphere was controlled by a N₂ inlet and a PMA-12 photomultiplier. Pieces of materials (5mm^{∗}5mm) were deposited in quartz cells to realize the measurements. Absorption of the excitation wavelength was kept higher than 50 % to insure the reliability of the measurement.

Lifetime measurements and TRPL mapping at 296 K were realized using a picosecond laser diode (Jobin Yvon deltadiode, 375 nm) and a Hamamatsu C10910-25 streak camera mounted with a slow single sweep unit. Signals were integrated on the whole emission decay. Fits were obtained using origin software and the goodness of fit judge by the reduced χ² value and residual plot shape.

Temperature dependent lifetime measurements were realized using a Edinburgh FLS960 spectrometer equipped with a R928P Hamamatsu photodetector, a microflash and nanoflash lamps. Detection was realized on a 10 nm bandwith centred on the emission max of the desired emitter. Temperature was controlled using an Oxford Instrument Optistat cryostat.

### FIGURES:

Figure 1 represents the emission spectra under continuous irradiation (Nikon intensilight set up) at room temperature in air of material 1 of Example 1 (PDMSHyb Example 1), the inset shows the cluster emission signal at the beginning (plain line) and at the end (dashed line) of irradiation.
Figure 2 represents the follow up of emission maxima with time under continuous irradiation of material 1 of Example 1 (PDMSHyb Example 1).
Figure 3 represents the normalized emission spectra of material 1 of Example 1 (PDMSHyb Example 1) before (plain line) and after dashed) irradiation with a 405 nm 5mW laser diode.
Figure 4 represents the normalized emission spectra of material 2 of Example 2 (PEGMA-PMMAHyb) before (plain line) and after (dashed) irradiation.
Figure 5 represents the emission spectra of material 3 of Example 3 (PMMAHyb) before (plain line) and after (dashed line) irradiation irradiation with a 405 nm 5mW laser diode.
Figure 6 represents the emission spectra of material 4 of Example 4 (Phyb@cellulose (CAP) ou CAPHyb) under air (plain line) and N₂ saturated atmosphere (dashed line).
Figure 7 represents the IR spectra of Cellulose Acetate Phthalate (CAP) and Cs₂Mo₆I₈(OCOC₂F₅)₆ (MoIP), and CAP doped with 1 or 10 weight % (wt%) of MoIP labelled MoIP1@CAP and MoIP10@CAP respectively (Example 4).
Figure 8 represents the emission spectra of material 5 of example 5 (mOxi containing hybrid PMMA) under air (plain line) and N₂ saturated (dashed line) atmosphere.
Figure 9 represents the emission spectra of material 6 of Example 5 (Oxi containing hybrid PMMA) under air (plain line) and N₂ saturated (dashed line) atmosphere.

### Example 1 - Material 1 according to the first embodiment of the present invention-Copolymerisation of both emitters - integration in polydimethylsiloxane (PDMS) matrix - PDMShyb

### 1. Preparation of (Cat⁺)₂[Mo₆I₈(OCOC₂F₅)₆]²⁻:

The polymerizable cluster is obtained in two steps starting from commercially available organic starting materials (for the organic cation salt precursor) and from M. Amela-Cortes, Y. Molard, S. Paofai, A. Desert, J.-L. Duvail, N. G. Naumov and S. Cordier, Dalton Trans., 2016, 45, 237-245 for the cluster precursor.

### 1.1 N,N-dimethyl-N-(undec-10-en-1-yl)dodecanammonium bromide (Cat+-Br):

The ammonium salt was obtained in one step reaction using 11-bromoundec-1-ene and N,N-dimethyldodecylamine (Scheme 1). 11-bromoundec-1-ene (1 g, 4.29 mmol) was dissolved in 25 mL of chloroform and added to a solution of N,N-dimethyldodecylamine (0.92 g, 4.29 mmol) in 25 mL of chloroform. To this mixture was added 50 mL of acetonitrile. The reaction media was stirred at 80 °C for 48 h. The solvent was evaporated and the product was dried under vacuum for one night. The desired ammonium compound was obtained as a yellowish viscous oil.

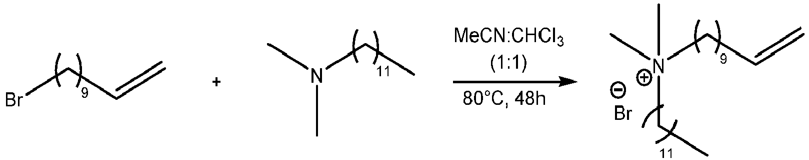

### Synthesis scheme of N,N-dimethyl-N-(undec-10-en-1-yl)dodecanammonium bromide.

¹H-NMR (400 MHz, CDCl₃): 5.79 (m, 1H, -CH₂-C*H*=C), 4.97 (m, 1H, -C=CHH), 4.91 (m, 1H, -C=CH*H*), 3.55-3.44 (m, 4H, -CH₂-N⁺), 3.40 (s, 6H, CH₃-N⁺), 1.88-1.59 (m, 4H, -CH₂-CH₂-N⁺), 1.44-1.16 (m, 32H, -(CH₂)₉- and -(CH₂)₇-), 0.86 (t, 3H, -CH₃).

### 1.2 Preparation of Cs₂Mo₆I₈(OCOC₂F₅)₆ :

To a solution of Cs₂Mo₆I₁₄ (1.5 g, 0.52 mmol) in 20 mL of acetone, was added a solution of silver pentafluoropropionate (0.935 g, 3.42 mmol) in 10 mL of acetone under argon and in the dark. The mixture was stirred for 48 h in the dark and then was filtered through a Celite® pad. The red solution was then evaporated to yield a red-orange powder.
¹⁹F-NMR (acetone-d₆): *δ* (ppm) = -83 (3F), -120 (2F).
Energy Dispersive X-Ray Analysis: Cs 2, Mo 8, 111, F 77, no Ag.

### 1.3 (Cat⁺₂[Mo₆I₈(OCOC₂F₅)₆]²⁻:

Cs₂Mo₆I₈(OCOC₂F₅)₆ (0.1 g, 0.035 mmol) was dissolved in 20 mL of acetone. To this solution was added (0.035 g, 0.070 mmol) of the synthetized cation (Cat+-Br) in 10 mL of acetone. The mixture was heated at 40 °C for 2 h. The solvent was evaporated and 20 mL of dichloromethane was added. The CsBr salt formed (white precipitate) was filtered off. Dichloromethane was evaporated under vacuum. The organic polymerizable cluster was obtained as a red viscous oil.
¹H-NMR (400 MHz, CDCl₃): 5.80 (m, 1H, -CH₂-C*H*=C), 4.99 (m, 1H, -C=C*H*H), 4.93 (m, 1H, -C=CH*H*), 3.34-3.24 (m, 4H, -CH₂-N⁺), 3.17 (s, 6H, CH₃-N⁺), 1.90-1.64 (m, 4H, -CH₂-CH₂-N⁺), 1.44-1.17 (m, 32H, -(CH₂)₉- and -(CH₂)₇-), 0.87 (t, 3H, -CH₃).
¹⁹F-NMR (400 MHz, CDCl₃): -82.26 (s, 3F), -120.28 (s, 2F).

### 2. Preparation of the organic compound, 3- oxindole (Oxi):

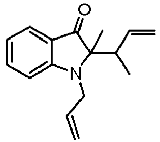

The 3-oxindole was prepared following the procedure reported in Hortense Lauwick, Yang Sun, Huriye Akdas-Kilig, Sylvien Dérien, and Mathieu Achard, Chem Eur. J, 2018, 24, 7964-7969.

### 3. Polymerization:

### PHyb@PDMS or PDMSHyb- Material 1 :

0.5% wt. (weight %) of the 3-oxindole (Oxi) was dissolved in 60 % wt. of 1,3-divinyltetramethyldisiloxane monomer and 37.5% wt. of 2,4,6,8-tetramethylcyclotetrasiloxane crosslinker. To this mixture was added 2% wt. of the polymerizable cluster dissolved in 2 mL of dichloromethane. Then, 0.5 µL of Platinum(0)-1 ,3-divinyl-1,1,3,3-tetramethyldisiloxane complex solution in xylene (Pt -2%) was added such as catalyst. The reaction media was placed in an oven at 40°C for 2 days. A homogenous and transparent orange reticulated hybrid polymer was then obtained.

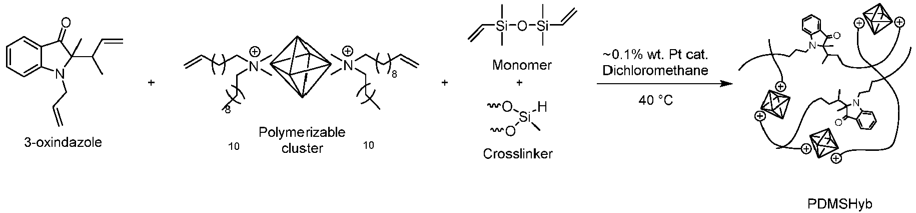

### Synthetical scheme of Material 1 (PDMS hybrid derivative)

### Emission properties of Material 1:

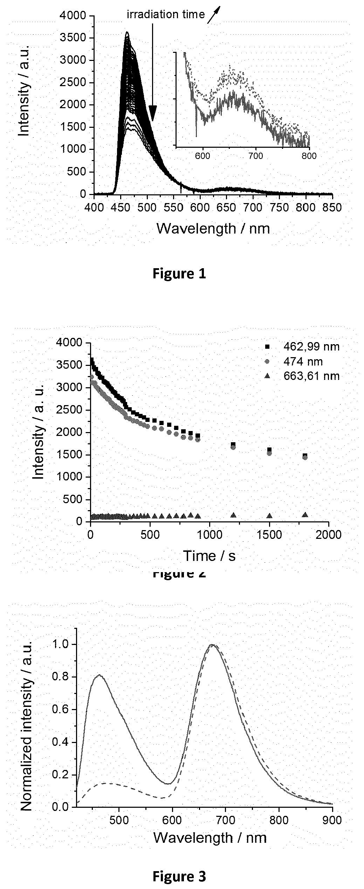

Figure 1 presents the emission spectra recorded during continuous irradiation in air of material 1 using an irradiation source made of a Nikon Hg intensilight and a 380nm-420nm optical filter, while figure 2 shows the evolution of emission maxima during this continuous irradiation.

Emission spectra are made of two bands one centred at around 470 nm corresponding to the emission of the Oxi organic fluorophore and a second less intense centred around 670 nm corresponding to the phosphorescence of the inorganic cluster that is highly sensitive to oxygen concentration. The metal cluster excited state generated upon irradiation. (Jackson, J. A.; Turro, C.; Newsham, M. D.; Nocera, D. G., Oxygen quenching of electronically excited hexanuclear molybdenum and tungsten halide clusters. J. Phys. Chem. 1990, 94 (11), 4500-4507) reacts efficiently with triplet oxygen to generate the NIR emissive and reactive singlet oxygen. PDMS matrix presents a high gas permeability. As a result, the oxygen concentration in the material is nearly not modified even after a long irradiation time. In contrast to already published results for PU (M. Amela-Cortes, S. Paofai, S. Cordier, H. Folliot and Y. Molard, Chem. Commun., 2015, 51, 8177-8180.), under irradiation, there is no noticeable in change of emission intensity but a change of emission color, which is easier to detect. The emission color can then be tuned by modifying the atmosphere of the hybrid. The same phenomenon, but much more pronounced is observed when a 405 nm laser diode is used to irradiate material 1 in air as depicted in Figure 3. In this case, the stronger irradiation allows a full and fastest consumption of the oxygen surrounding the cluster core leading to a large increase of its emission band. Meanwhile, the absence of oxygen allows an efficient energy transfer from the organic to the inorganic luminophore, thus lowering the Oxi emission signal.

This ability to modulate the intensity of the blue and red emission bands is also observed with the nature of the atmosphere. In fact, when material 1 is surrounded by air its AQY value is 0.062 while in a saturated N₂ atmosphere (i.e. in the lack of oxygen) this AQY largely increases up to 0.618. The change of color from blue-white in air to red in N₂ is instantaneous, reversible and can be used in O₂ sensor technologies.

### Example 2 - Material 2 according to the third embodiment of the present invention- Integration of metal cluster compound using PEGMA as comonomer and simple mixing (no polymerization) with the organic compound (3-oxindole (Oxi)) - PMMA-PEGMA/Oxy/Cs₂MO₆I₈(OCOC₂F₅)₆

### 1. Precursor of the polymer matrix PMMA-PEOMA copolymer :

According to M. Robin, N. Dumait, M. Amela-Cortes, C. Roiland, M. Harnois, E. Jacques, H. Folliot and Y. Molard, Chem. Eur. J., 2018, 24, 4825-4829.

PMMA-PEOMA copolymer containing 2 mol% of PEOMA was prepared according to the following procedure:
PEOMA (357mg (2mol%)) and freshly distilled methylmethacrylate (MMA) (1.88g, 2ml) were dissolved in 20ml of toluene. The solution was then degassed with argon during 15 min. After addition of 0.2wt% of azobisisobutyronitrile (AIBN) compared to MMA, the solution was heated at 80°C under argon atmosphere during 24 hours. Purification of the product was achieved by performing at least two precipitations in toluene/methanol solvents. The obtained precipitate was filtered, washed with methanol and dried using a rotaevaporator. The samples were obtained as white powder after drying under vacuum for 17h.
¹H- NMR (400 MHz, CDCl₃): 3.67 (s, 2H, C₂H₄-O-CH₃), 3.62 (s, 3H, COO-CH₃), 2.04 - 1.73 (m, 2H, CH₂), 0.96 (d, J = 68.7 Hz, 3H, C-CH₃).

### 2. Preparation of Cs₂Mo₆I₈(OCOC₂F₅)₆ : as disclosed in Example 1

### 3. Preparation of 3-oxindole Oxi: as disclosed in Example 1

### 4. PMMA-PEGMAHyb- Material 2:

PMMA-PEGMA 95.9 wt%, + Cs₂Mo₆I₈(OCOC₂F₅)₆ (3.6 wt%) + 3-oxindole Oxi (0.5 wt %).

All compounds were solubilized in dichloromethane. The solution was concentrated and drop casted to give a thin film after solvent evaporation.

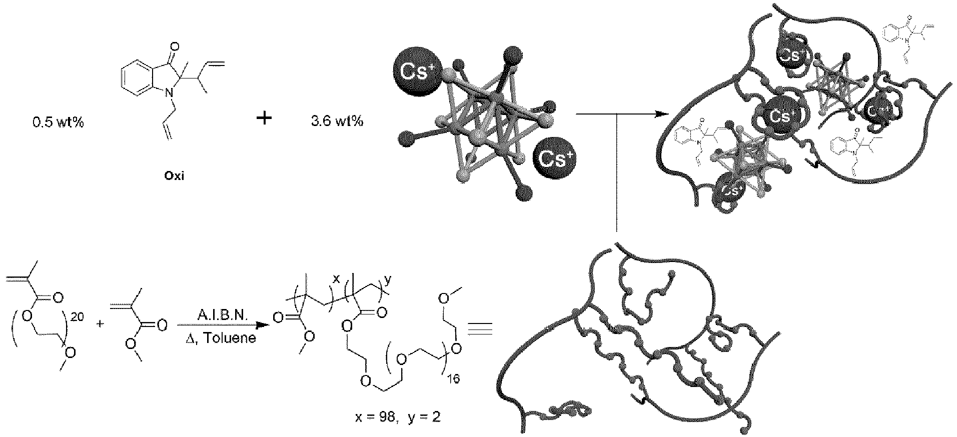

### Synthetical scheme of material 2 (Mo6 and Oxi integration in a PMMA-PEGMA derivative)

### Emission properties of Material 2:

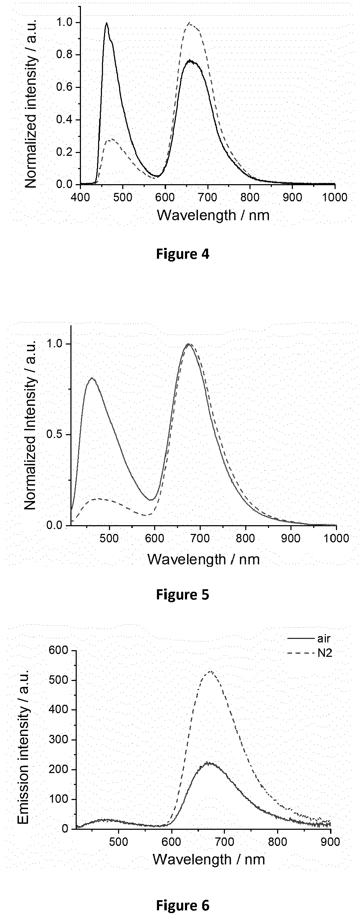

As depicted in Figure 4, irradiating material 2 with a 405 nm laser beam leads to an increase of the cluster emission band and a decrease of the oxindole emission band. This phenomenon is due to the consumption of molecular oxygen within the polymer by the metal cluster excited state generated upon irradiation. (Jackson, J. A.; Turro, C.; Newsham, M. D.; Nocera, D. G., Oxygen quenching of electronically excited hexanuclear molybdenum and tungsten halide clusters. J. Phys. Chem. 1990, 94 (11), 4500-4507). It allows to write directly on the polymer matrix using a 405 nm laser pointer. The writing can be revealed using a standard UV 2A lamp. Writing appears in red while the rest of the matrix emits in white. The gas permeability of the PMMA-PEGMA copolymer is moderate, therefore, the writing up fades in 5 minutes (for a full disappearance) with a 5 mW 405 nm laser pointer.

Calculated Emission lifetime shows that as expected the fluorescence of Oxi is poorly affected by the change of atmosphere. The cluster phosphorescence lifetime increases in the lack of oxygen. As presented for example 1 and 2, saturating the atmosphere with N₂ induces a full emission capacity of metal cluster (no oxygen quenching) which in turn leads to a large increase of the emission AQY of material 2.

Emission life time at room temperature and AQY (λ_{exc.} = 375 nm).

| Emission lifetime | | | | AQY | |
|---|---|---|---|---|---|
| Air | | vacuum | | Air | N₂ |
| Fluo. (392-528 nm) | Phospho. (602-738 nm) | Fluo. (392-528 nm) | Phospho. (602-738 nm) | | |
| 8.64 ns (2950) | 150 µs (6000) | 8.23 ns (3320) | 225 µs | 0.091 | 0.277 |
| 3.30 ns (7180) | | 3.29 ns (9600) | | | |
| | 61 µs (20150) | | | | |
| 0.99 ns (4630) | | 0.93 ns (6020) | | | |

### Example 3: Material 3 according to the fourth embodiment of the present invention- Copolymerization of the metal cluster compound and simple mixing (no polymerization) with the organic compound (3-oxindole (Oxi))

### 1. Preparation of the polymerizable cluster:

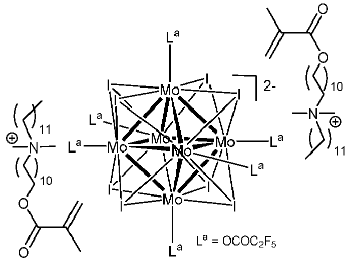

The polymerizable cluster is obtained according to M. Amela-Cortes, Y. Molard, S. Paofai, A. Desert, J.-L. Duvail, N. G. Naumov and S. Cordier, Dalton Trans., 2016, 45, 237-245.

### 2. Preparation of 3-oxindole Oxi : as disclosed in Example 1

### 3. Preparation of PMMAHyb-Material 3:

**P_{hyb}. (Material 3**) 0.5% wt. of 3-oxindazole or 3-oxindole and 2% wt. of the polymerizable cluster was dissolved in 97.3% wt. of distilled MMA. After the addition of 0.2% wt. of AIBN, the solution was sonicated until to obtain a homogenous mixture. Then, the solution was degassed 5 min using Ar and placed in an oven at 65°C for 17 hours. Transparent reddish polymer pellet was obtained.
¹H- NMR (500 MHz, (CD₃)₂CO): 3.63 (s, 3H, CH₃-O), 2.03-1.44 (m, 2H, -CH₂-), 1.43-0.70 (m, 3H, α-CH₃-).
¹⁹F- NMR (470 MHz, (CD₃)₂CO): -82.98 (t, 3F), -120.63 (m, 2F).

**P_{Oxi}.** 0.5% wt. of the 3-oxindole was dissolved in 99.3% wt. of distilled MMA. After the addition of 0.2% wt. of AIBN, the solution was sonicated until to obtain a homogenous mixture. Then, the solution was degassed 5 min using Ar and placed in an oven at 65°C for 17 hours. Transparent polymer pellet was obtained.
¹H-NMR (500 MHz, (CD₃)₂CO): 3.63 (s, 3H, CH₃-O), 2.03-1.44 (m, 2H, -CH₂-), 1.43-0.70 (m, 3H, α-CH₃-).

**P_{Mo}.** 2% wt. of the polymerizable cluster was dissolved in 97.8% wt. of distilled MMA. After the addition of 0.2% wt. of AIBN, the solution was sonicated until to obtain a homogenous mixture. Then, the solution was degassed 5 min using Ar and placed in an oven at 65°C for 17 hours. Transparent reddish polymer pellet was obtained.
¹H- NMR (500 MHz, (CD₃)₂CO): 3.62 (s, 3H, CH₃-O), 2.03-1.40 (m, 2H, -CH₂-), 1.40-0.69 (m, 3H, α-CH₃-).
¹⁹F- NMR (470 MHz, (CD₃)₂CO): -82.98 (t, 3F), -120.63 (m, 2F).

Thin films were obtained by slow evaporation of chloroform solution containing the hybrid.

### Emission properties of material 3:

Figure 5 shows the normalized emission spectra of material 3 before (plain line) and after (dashed line) 20 s of UV irradiation with a 405 nm laser diode. While the Oxi and metal cluster emission maxima are nearly at the same level before irradiation leading to a material that emits in white, the Oxi blue fluorescence band diminishes strongly upon irradiation. Therefore, the emission color goes from white to red upon irradiation. This phenomenon originates from i) the consumption of molecular oxygen within the polymer by the metal cluster excited state generated upon irradiation. (Jackson, J. A.; Turro, C.; Newsham, M. D.; Nocera, D. G., Oxygen quenching of electronically excited hexanuclear molybdenum and tungsten halide clusters. J. Phys. Chem. 1990, 94 (11), 4500-4507), and ii) from a resonant energy transfer occurring from the Oxi emitter to the metal cluster. Due to the low permeability of the PMMA matrix, this change of color is persistent during a lap of time that depends on the irradiation strength. Therefore, this matrix is suitable to write evanescent messages and to store informations for tailored time frames that can vary from several minutes up to several days. The same phenomenon is observed when the material is placed in a controlled atmosphere: passing from air to a N₂ saturated atmosphere leads to the same behaviour of luminophores emission bands and to an increase of the AQY from 0.05 to 0.16 upon excitation at 375 nm.

The following table presents kinetic parameters and quantum yields of samples containing Oxi (Pₒₓᵢ), the metal cluster (P_{Mo}) and both luminophores at the same concentration (P_{hyb}).

| Photophysical data (F: fluorescence, Ph: phosphorescence, average lifetimes and absolute quantum yield) recorded on thin films. | | | | | | | | | | |
|---|---|---|---|---|---|---|---|---|---|---|
| average lifetimes | | | | | | | | | AQY (λ_{exc} = 365 nm) | |
| | 300 K | | | | | 77K | | | 300 K | |
| | Air | | Vacuum | | | Vacuum | | | Air | N₂ |
| | Fₒₓᵢ^{a} | Ph_{Mo}^{b} | Fₒₓᵢ^{a} | Phₒₓᵢ^{a} | Ph_{Mo}^{b} | Fₒₓᵢ^{a} | Phₒₓᵢ^{a} | Ph_{Mo}^{b} | | |
| P_{hyb} | 5.9 ns | 31.6 µs | 14.4 ns | 6.3 ms | 277 µs | 18.7 ns | 400 ms | 486 µs | 0.13 | 0.38 |
| Pₒₓᵢ | 5.9 ns | - | 15.4 ns | 7.9 ms | | 17.2 ns | 533 ms | - | 0.06 | 0.06 |
| P_{Mo} | - | 52.2 µs | - | - | 222 µs | - | - | 295 µs | 0.10 | 0.37 |
| ^{a} Integration area= 450-548nm; ^{b}integration area : 612-748nm | | | | | | | | | | |

The resonant energy transfer from Oxi to the metal cluster is best shown at 77K under vacuum by time correlated emission studies as the phosphorescence of the Oxi derivative is not detected at room temperature in air. This is due to a temperature assisted deactivation of its triplet state, a dominant phenomenon at room temperature and to its reactivity with oxygen. At 77K, the phosphorescence lifetime of the oxi derivatives diminishes in presence of metal cluster while the metal cluster lifetime increases largely upon addition of Oxi in its host matrix, evidencing the resonant energy transfer.

### Example 4 : Material 4 according to the seven embodiment of the present invention- Hybrid based on a Cellulose Acetate Phthalate (CAP) host - Simple mixing of both emitters and polymer:

### 1. Preparation of the 3-oxindole :

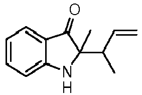

The 3-oxindole (monofunctionalised, (mOxi)) was prepared following the procedure reported in Hortense Lauwick, Yang Sun, Huriye Akdas-Kilig, Sylvien Dérien, and Mathieu Achard, Chem Eur. J, 2018, 24, 7964-7969

### 2. Preparation of Cs₂Mo₆I₈(OCOC₂F₅)₆ : As described in Example 1

### 3. Preparation of CAPHyb- material 4 :

Cellulose Acetate Phthalate (CAP) (2g, CAS:9004-38-0), Cs₂Mo₆I₈(OCOC₂F₅)₆ (90 mg, 4 wt%) and mOxi (10mg, 0.5 wt%) were solubilized in 20 ml of acetone. The solution was stirred for 10 minutes to allow a good solubilisation of all compounds and then poured in a petri dish. The solution was slowly evaporated leading to a hybrid luminescent and homogeneous film.

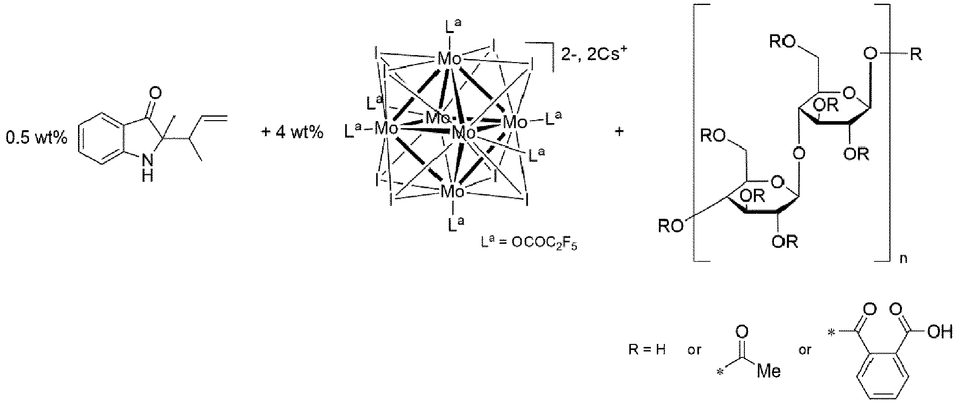

### Schematic representation of both emitters and Cellulose Acetate Phthalate for material 4

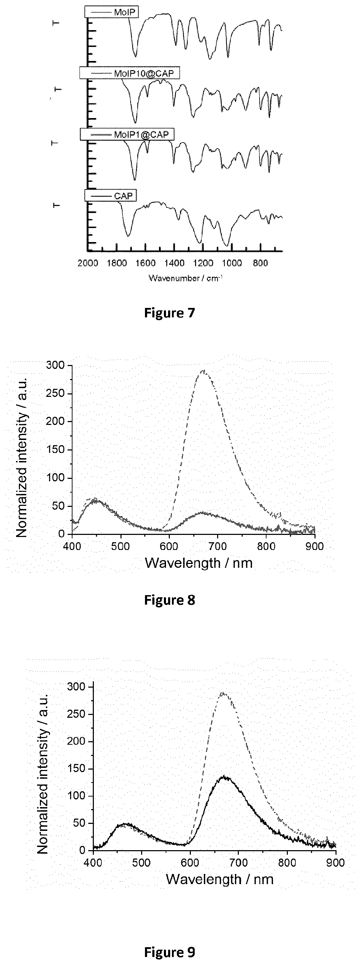

The homogeneity of the sample is assessed by weak interactions between CAP carbonyl functions and the Cs₂Mo₆I₈(OCOC₂F₅)₆ as shown by Figure 7. Infrared spectra of neat CAP, Cs₂Mo₆I₈(OCOC₂F₅)₆ and Cs₂Mo₆I₈(OCOC₂F₅)₆ @CAP films show that the C=O stretching band corresponding to the CAP acetate and phthalate groups undergoes a huge shift to lower energy from 1727 cm⁻¹ to 1674 cm⁻¹ as soon as 1 wt % of Cs₂Mo₆I₈(OCOC₂F₅)₆ is introduced.

### Emission properties of material 4 :

Emission properties of material 4 are very similar to those of material 3. As depicted by figure 6, saturating the atmosphere of material 4 with N₂ leads to an increase of the cluster emission and thus to a change of the emission color as well as a change of the material AQY that increases from 0.17 in air to 0.36 under N₂. From the lifetime point of view, this lack of O₂ induces the disappearance of the longest fluorescence lifetime component of the organic emitter and a large increase of the cluster phosphorescence lifetime that might be indicative of a slight resonant energy transfer between both emitters although the intensity modulation of the Oxi band is not as important as observed for material 3.

Life time at room temperature and AQY (λ_{exc}. = 375 nm).

| Emission lifetime | | | | AQY | |
|---|---|---|---|---|---|
| Air | | vacuum | | Air | N₂ |
| Fluo. (392-528 nm) | Phospho. (602-738 nm) | Fluo. (392-528 nm) | Phospho. (602-738 nm) | | |
| 9.7 ns (0.29) | 98 µs (0.51) | 5.9 ns (0.08) | 174 µs (0.69) | 0.17 | 0.36 |
| 4.7 ns (0.11) | | | | | |
| | 46 µs (0.49) | 1.62 (0.92) | 54µs (0.31) | | |
| 1.65 ns (0.60) | | | | | |

### Example 5 : Materials 5 and 6 according to the seven embodiment of the present invention- Hybrid based on a PMMA host - Simple mixing of both emitters and polymer

### 1. Preparation of the 3-oxindoles :

- mOxi monofunctionnalised oxindole : The same as in Example 4
- Oxi : difunctionnalised oxindole : The same as in Example 1

### 2. Preparation of Cs₂Mo₆I₈(OCOC₂F₅)₆ : As described in Example 1

### 3. Preparation of materials 5 and 6:

Commercial PMMA (Mw=30000g.mol-1, 2g), Cs₂Mo₆I₈(OCOC₂F₅)₆ (45 mg, 2 wt%) and mOxi (10mg, 0.5 wt%) or Oxi (10mg, 0.5 wt%) were solubilized in a mixture of dichloromethane and tetrahydrofurane (20 ml). The solution was stirred for 10 minutes and sonicated for 5 minutes to allow the solubilisation of all compounds (clear solution) and then poured in a petri dish. The solvents were slowly evaporated leading to a hybrid luminescent and homogeneous film.

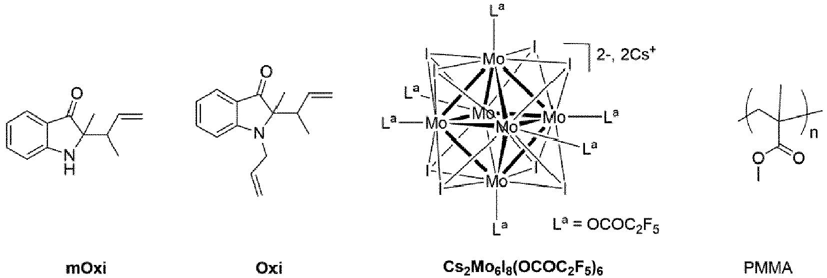

### Schematic representation of luminophores and PMMA for materials 5 and 6

### Emission properties of materials 5 and 6:

Figures 8 and 9 present respectively the emission spectra under air (plain line) and N₂ saturated atmosphere (dashed line) of material 5 and 6 thin films, respectively.

Here, the Oxi blue band emission is not sensitive to a change of atmosphere which might be interpreted as an independent behaviour of both luminophores in the host matrix (no energy transfer). However, the same behaviour is observed that is a large increase of the cluster emission band intensity upon N₂ atmosphere saturation leading to a drastic color change of the hybrid matrix upon UV irradiation with a classic UV-2A tube, and a large increase of the AQY values as depicted in the following table. The same phenomenon is observed when samples are sufficiently irradiated with UV light so that the O₂ molecules surrounding metal clusters within the host matrix are consumed. Hence, due to the low permeability of the PMMA matrix, this change of color is persistent during a lap of time that depends on the irradiation strength. Therefore, these matrices are suitable to write evanescent messages and to store information for tailored time frames that can varies from several minutes up to several days.

| | AQY (λ_{exc.} = 375 nm) | |
|---|---|---|
| | Air | N₂ |
| mOxi Material 5 | 0.08 | 0.22 |
| Oxi Material 6 | 0.08 | 0.43 |

## Claims

1. A material comprising a polymer matrix functionalized with:
- an organic compound comprising a moiety of formula 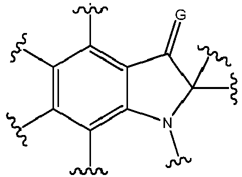 wherein G is :
- oxygen;
- sulfur;
- NR^{a}, N⁽⁺⁾R^{a}R^{b} with R^{a} and R^{b} are each independently H, C₁-C₁₈ alkyl, aryl or heteroaryl;
- CH-(EWG) C-(EWG)₂ or (EWG¹)-C-(EWG²) with EWG, EWG¹, EWG² being an electron withdrawing group (such as nitrile (-C≡N); ketone (C=O)-R^{c}; (ester (-(C=O)-OR^{c}) with R^{c} selected from H, C₁-C₁₈ alkyl, aryl and heteroaryl; aryl or heteroaryl (such as pyridinyl and pyrimidinyl));
- preferably oxygen;
- and a metal cluster compound comprising a moiety of formula [M₆Qⁱ₈L^{a}₆]^{d-}
wherein:
- M represents molybdenum (Mo), tungsten (W), rhenium (Re), or a mixture thereof, preferably Mo or W;
- Qⁱ is an inner ligand and represents a halogen or a chalcogen atom, preferably a halogen atom, or a mixture thereof; and
- L^{a} is an apical ligand and represents a halogen atom, an organic ligand or a mixture thereof
- d ranges from -4 to + 4, preferably 2 to 4, more preferably 2.

2. The material according to claim 1, wherein
- M represents molybdenum (Mo), tungsten (W), rhenium (Re), or a mixture thereof, preferably Mo or W, more preferably Mo;
- Qⁱ represents Cl, Br, I, S, Se or a mixture thereof, preferably Cl, Br or I; and
- L^{a} represents Cl, Br, I, CN, SCN, a carboxylate or a mixture thereof, preferably Cl, Br, I, a C₃F₇COO or a C₂F₅COO group.

3. The material according to claim 1 or 2, wherein said material is obtained by polymerizing the organic compound, the metal cluster compound and a precursor of the polymer matrix;
wherein the metal cluster compound and the organic compound are copolymerized with the precursor of the polymer matrix;
- the organic compound is represented by formula: 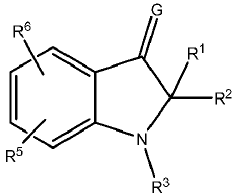 wherein:
G is as defined above,
R¹ and R² are each independently selected from alkyl, aryl, alkenyl (such as allyl), alkynyl (such as propargyl), -O-C(=O)-CH=CH₂, -O-C(=O)-C(CH₃)=CH₂, and -L-Pol,
R¹ and R² may form together a cycloalkyl,
R³ is selected from H, alkyl, -C=Oalkyl, C=Oaryl, -CO₂alkyl, CO₂aryl,-SO₂alkyl, -SO₂aryl, alkenyl, alkynyl (such as propargyl),-O-C(=O)-CH=CH₂,-O-C(=O)-C(CH₃)=CH₂,-L-Pol and -SiY¹Y²Y³ wherein Y¹, Y² and Y³ are each independently selected from H, alkyl, alkoxy, cycloalkyl, aryl, aryloxy and aralkyl (for example -SiY¹Y²Y³ is -Si(CH₃)₃),
R⁵ and R⁶ represent each independently H, alkyl, aryl, heteroaryl, hydroxyl, amino, halo, haloalkyl (such as trifluoromethyl), haloalkylthio (such as perhaloalkylthio groups such as trifluoromethylthiolate -SCF₃), -O-C(=O)-CH=CH₂, -O-C(=O)-C(CH₃)=CH₂ or-L-Pol,
With the proviso that at least one of R¹, R², R³, R⁵ or R⁶ is -L-Pol, L being a linker having from 1 to 30 methylene groups optionally interrupted by one of more atoms or groups of atoms chosen from the group consisting of aromatic rings, -O-, -CO-, -S-, -CH=CH-, -C ≡ C-, -COO-, -OC(O)-, -CH=N-, -C(O)NH,-N=N-, -NH-CO- and mixtures thereof, Pol being a polymerizable group;
- the metal cluster compound is represented by formula X⁺_{d}[M₆Qⁱ₈L^{a}₆]^{d-} wherein [M₆Qⁱ₈L^{a}₆]^{d-} is as defined above and X is an organic counter cation, said organic counter cation containing a cationic head substituted by at least one substituent including a polymerizable group and having the following formula (L1)ₘ-Cat-(L2)ₙ-Pol, whe
rein
L1 and L2 are each independently linkers having from 1 to 30 methylene groups, optionally interrupted by one of more atoms or groups of atoms chosen from the group consisting of aromatic rings, -O-, -CO-, -S-, -CH=CH-, -C ≡ C-, -COO-, -OC(O)-, -CH=N-, -C(O)NH, -N=N-, -NH-CO- and mixtures thereof m and n independently 0 or 1,
Cat represents a cationic head and is chosen from the group consisting of an imidazolium, a pyridinium, a pyrolidinium, an ammonium, a phosphonium, a hydroxyphosphonium and a sulfonium,
Pol is a polymerizable group.

4. The material according to claim 1 or 2, wherein said material is obtained by:
(i) polymerizing a precursor of the polymer matrix and the organic compound in a solvent containing the dissolved metal cluster compound and evaporating the solvent; or
(ii) polymerizing a precursor of the polymer matrix and the organic compound, dipping said resulting polymer in a solvent containing the dissolved metal cluster compound and evaporating the solvent;
wherein the organic compound is copolymerized with the precursor of the polymer matrix;
- said precursor of the polymer matrix is a precursor of a linear or branched polymer or copolymer containing one or several poly(ethylene oxide) (PEO) chains, said polymer or copolymer being optionally crosslinked and each PEO chain having at least 4 ethylene oxide monomer units;
- the organic compound is represented by the formula: 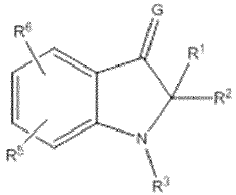
G is as defined above,
R¹ and R² are each independently selected from alkyl, aryl, alkenyl, alkynyl (such as propargyl), -O-C(=O)-CH=CH₂, -O-C(=O)-C(CH₃)=CH₂ and -L-Pol,
R¹ and R² may form together a cycloalkyl,
R³ is selected from H, alkyl, -C=Oalkyl, C=Oaryl, -CO₂alkyl, CO₂aryl,-SO₂alkyl, -SO₂aryl, alkenyl, alkynyl (such as propargyl), -O-C(=O)-CH=CH₂,-O-C(=O)-C(CH₃)=CH₂ , -L-Pol and -SiY¹Y²Y³ wherein Y¹, Y² and Y³ are each independently selected from H, alkyl, alkoxy, cycloalkyl, aryl, aryloxy and aralkyl (for example -SiY¹Y²Y³ is -Si(CH₃)₃),
R⁵ and R⁶ represent each independently H, alkyl, aryl, heteroaryl, hydroxyl, amino, halo, haloalkyl (such as trifluoromethyl), haloalkylthio (such as perhaloalkylthio groups such as trifluoromethylthiolate -SCF₃), -O-C(=O)-CH=CH₂, -O-C(=O)-C(CH₃)=CH₂ or -L-Pol,
With the proviso that at least one R¹, R², R³, R⁵ or R⁶ is L-Pol, L being a linker having from 1 to 30 methylene groups optionally interrupted by one of more atoms or groups of atoms chosen from the group consisting of aromatic rings,-O-, -CO-, -S-, -CH=CH-, -C ≡ C-, -COO-, -OC(O)-, -CH=N-, -C(O)NH, -N=N-, -NH-CO- and mixtures thereof, Pol being a polymerizable group which reacts with the precursor of the polymer matrix;
- the metal cluster compound is represented by formula X⁺_{d}[M₆Qⁱ₈L^{a}₆]^{d-} wherein [M₆Qⁱ₈L^{a}₆]^{d-} is as defined above and X is a counter cation chosen from the group consisting of alkali metal cation, hydronium, and an ammonium, preferably chosen between Cs, K, Na, Li, H₃O, (nC₄H₉)₄N and NH₄, more preferably Cs.

5. The material according to claim 1 or 2, wherein said material is obtained by:
(i) polymerizing a precursor of the polymer matrix in a solvent containing the dissolved organic compound and metal cluster compound, and evaporating the solvent; or
(ii) polymerizing a precursor of the polymer matrix, dipping the resulting polymer in a solvent containing the dissolved organic compound and metal cluster compound and evaporating the solvent;
wherein
- the organic compound is represented by formula 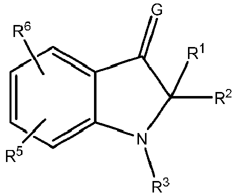
G is as defined above,
R¹ and R² are each independently selected from alkyl, aryl, alkenyl, alkynyl (such as propargyl), -O-C(=O)-CH=CH₂, -O-C(=O)-C(CH₃)=CH₂,
R¹ and R² may form together a cycloalkyl,
R³ is selected from H, alkyl, -C=Oalkyl, C=Oaryl, -CO₂alkyl, CO₂aryl,-SO₂alkyl, -SO₂aryl, alkenyl, alkynyl (such as propargyl), -O-C(=O)-CH=CH₂,-O-C(=O)-C(CH₃)=CH₂ and -SiY¹Y²Y³ wherein Y¹, Y² and Y³ are each independently selected from H, alkyl, alkoxy, cycloalkyl, aryl, aryloxy and aralkyl (for example -SiY¹Y²Y³ is -Si(CH₃)₃),
R⁵ and R⁶ represent each independently H, alkyl, aryl, heteroaryl, hydroxyl, amino, halo, haloalkyl (such as trifluoromethyl), haloalkylthio (such as perhaloalkylthio groups such as trifluoromethylthiolate -SCF₃), -O-C(=O)-CH=CH₂, -O-C(=O)-C(CH₃)=CH₂,
- the metal cluster compound is represented by formula X⁺_{d}[M₆Qⁱ₈L^{a}₆]^{d-} wherein [M₆Qⁱ₈L^{a}₆]^{d-} is as defined above and X is a counter cation chosen from the group consisting of alkali metal cation, hydronium, and an ammonium, preferably chosen between Cs, Na, K, Li, H₃O, (nC₄H₉)₄N and NH₄, more preferably Cs,
- said precursor of the polymer matrix is a precursor of a linear or branched polymer or copolymer containing one or several poly(ethylene oxide) (PEO) chains, said polymer or copolymer being optionally crosslinked and each PEO chain having at least 4 ethylene oxide monomer units.

6. The material according to claim 1 or 2, wherein said material is obtained by:
(i) polymerizing a precursor of the polymer matrix and the metal cluster compound in a solvent containing the dissolved organic compound and evaporating the solvent; or
(ii) polymerizing a precursor of the polymer matrix and the metal cluster, dipping said resulting polymer in a solvent containing the dissolved organic compound and evaporating the solvent;
wherein the metal cluster is copolymerized with the precursor of the polymer matrix;
- the organic compound is represented by formula: 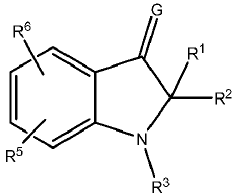 wherein:
G is as defined above,
R¹ and R² are each independently selected from alkyl, aryl, alkenyl, alkynyl (such as propargyl), -O-C(=O)-CH=CH₂, -O-C(=O)-C(CH₃)=CH₂,
R¹ and R² may form together a cycloalkyl,
R³ is selected from H, alkyl, -C=Oalkyl, C=Oaryl, -CO₂alkyl, CO₂aryl,-SO₂alkyl, -SO₂aryl, alkenyl, alkynyl (such as propargyl), -O-C(=O)-CH=CH₂, and -O-C(=O)-C(CH₃)=CH₂ and -SiY¹Y²Y³ wherein Y¹, Y² and Y³ are each independently selected from H, alkyl, alkoxy, cycloalkyl, aryl, aryloxy and aralkyl (for example -SiY¹Y²Y³ is -Si(CH₃)₃),
R⁵ and R⁶ represent each independently H, alkyl, aryl, heteroaryl, hydroxyl, amino, halo, haloalkyl (such as trifluoromethyl), haloalkylthio (such as perhaloalkylthio groups such as trifluoromethylthiolate -SCF₃), -O-C(=O)-CH=CH₂, or -O-C(=O)-C(CH₃)=CH₂,
- the metal cluster compound is represented by formula X⁺_{d}[M₆Qⁱ₈L^{a}₆]^{d-} wherein [M₆Qⁱ₈L^{a}₆]^{d-} is as defined above and X is an organic counter cation containing a cationic head substituted by at least one substituent including a polymerizable group and having the following formula (L1)ₘ-Cat-(L2)ₙ-Pol, whe
rein
L1 and L2 are each independently linkers having from 1 to 30 methylene groups, optionally interrupted by one of more atoms or groups of atoms chosen from the group consisting of aromatic rings, -O-, -CO-, -S-, -CH=CH-, -C ≡ C-, -COO-, -OC(O)-, -CH=N-, -C(O)NH, -N=N-, -NH-CO- and mixtures thereof, m and n independently 0 or 1,
Cat represents a cationic head and is chosen from the group consisting of an imidazolium, a pyridinium, a pyrolidinium, an ammonium, a phosphonium, a hydroxyphosphonium and a sulfonium,
Pol is a polymerizable group

7. The material according to claim 1 or 2, wherein said material is obtained by reacting the organic compound and the metal cluster compound to form a salt, and polymerizing a precursor of the polymer matrix and the salt;
- the organic compound is represented by formula: 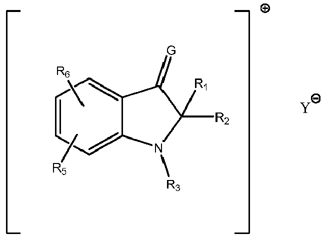 wherein:
G is as defined above,
R¹ and R² are each independently selected from alkyl, aryl, alkenyl, alkynyl (such as propargyl),-O-C(=O)-CH=CH₂, -O-C(=O)-C(CH₃)=CH₂, -(L3)ₚ-(Cat)ᵣ-(L4)_{q}-(Pol)ₛ, -(L3)ₚ-(Pol)ᵣ-(L4)_{q}-(Cat)ₛ,
R¹ and R² may form together a cycloalkyl,
R³ is selected from H, alkyl, -C=Oalkyl, C=Oaryl, -CO₂alkyl, CO₂aryl,-SO₂alkyl, -SO₂aryl, alkenyl, alkynyl (such as propargyl), -O-C(=O)-CH=CH₂,-O-C(=O)-C(CH₃)=CH₂, -(L3)ₚ-(Cat)ᵣ-(L4)_{q}-(Pol)ₛ, -(L3)_{P}-(Pol)ᵣ-(L4)_{q}-(Cat)ₛ and -SiY¹Y²Y³ wherein Y¹, Y² and Y³ are each independently selected from H, alkyl, alkoxy, cycloalkyl, aryl, aryloxy and aralkyl (for example -SiY¹Y²Y³ is-Si(CH₃)₃),
R⁵ and R⁶ represent each independently H, alkyl, aryl, heteroaryl, hydroxyl, amino, halo, haloalkyl (such as trifluoromethyl), haloalkylthio (such as perhaloalkylthio groups such as trifluoromethylthiolate -SCF₃), -O-C(=O)-CH=CH₂, -O-C(=O)-C(CH₃)=CH₂, -(L3)ₚ-(Cat)ᵣ-(L4)_{q}-(Pol)ₛ, -(L3)ₚ-(Pol)ᵣ-(L4)_{q}-(Cat)ₛ,
wherein
L3 and L4 are each independently linkers having from 1 to 30 methylene groups, optionally interrupted by one of more atoms or groups of atoms chosen from the group consisting of aromatic rings, -O-, -CO-, -S-, -CH=CH-, -C ≡ C-, -COO-, -OC(O)-, -CH=N-, -C(O)NH, -N=N-, -NH-CO- and mixtures thereof,
p and q independently 0 or 1,
Cat is a cationic group, preferably selected from imidazolium, a pyridinium, a pyrolidinium, an ammonium, a phosphonium, a hydroxyphosphonium and a sulfonium, Pol is a polymerisable group,
r and s independently 0 or 1,
With the proviso that at least one of R¹, R², R³, R⁵ or R⁶ is -(L3)ₚ-(Cat)ᵣ-(L4)_{q}-(Pol)ₛ, or -(L3)ₚ-(Pol)ᵣ-(L4)_{q}-(Cat)ₛ,
- the metal cluster compound is represented by formula X⁺_{d}[M₆Qⁱ₈L^{a}₆]^{d-} wherein [M₆Qⁱ₈L^{a}₆]^{d-} is as defined above and X is an counter cation chosen from the group consisting of alkali metal cation, hydronium, and an ammonium, preferably chosen between Cs, K, H₃O, (nC₄H₉)₄N and NH₄, more preferably Cs,
- The salt is represented by formula:

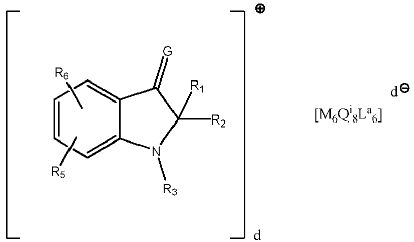

8. The material according to claim 1 or 2, wherein said material is obtained by:
(i) reacting the organic compound and the metal cluster compound to form a complex and polymerizing a precursor of the polymer matrix and the complex in a solvent and evaporating the solvent or
ii) polymerizing a precursor of the polymer matrix and the organic compound, dipping said resulting polymer in a solvent containing the dissolved metal cluster compound and evaporating the solvent
wherein the organic compound is copolymerized with the precursor of the polymer matrix;
- the organic compound is represented by formula: 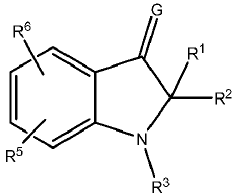 wherein:
G is as defined above,
R¹ and R² are each independently selected from alkyl, aryl, alkenyl, alkynyl (such as propargyl), , -O-C(=O)-CH=CH₂, -O-C(=O)-C(CH₃)=CH₂, -L6-Pol,-L7-Cycle, -L8-PEO, -L9-PEO-L10- Pol, and -L11-Cycle-L12-Pol,
R¹ and R² may form together a cycloalkyl,
R³ is selected from H, alkyl, -C=Oalkyl, C=Oaryl, -CO₂alkyl, CO₂aryl,-SO₂alkyl, -SO₂aryl, alkenyl, alkynyl (such as propargyl), -O-C(=O)-CH=CH₂,-O-C(=O)-C(CH₃)=CH₂, -L6-Pol, -L7-Cycle, -L8-PEO, -L9-PEO-L10-Pol, -L11-Cycle-L12-Pol and -SiY¹Y²Y³ wherein Y¹, Y² and Y³ are each independently selected from H, alkyl, alkoxy, cycloalkyl, aryl, aryloxy and aralkyl (for example -SiY¹Y²Y³ is -Si(CH₃)₃),
R⁵ and R⁶ represent each independently H, alkyl, aryl, heteroaryl, hydroxyl, amino, halo, haloalkyl such as trifluoromethyl, haloalkylthio such as perhaloalkylthio groups such as trifluoromethylthiolate -SCF3, -O-C(=O)-CH=CH₂, -O-C(=O)-C(CH₃)=CH₂, -L6-Pol, -L7-Cycle, -L8-PEO, -L9-PEO-L10-Pol, or -L11-Cycle-L12-Pol,
L6, L7, L8, L9, L10, L11 and L12 are each independently linkers having from 1 to 30 methylene groups, optionally interrupted by one of more atoms or groups of atoms chosen from the group consisting of aromatic rings, -O-, -CO-, -S-,-CH=CH-, -C ≡ C-, -COO-, -OC(O)-, -CH=N-, -C(O)NH, -N=N-, -NH-CO- and mixtures thereof,
Cycle being a cyclic ether comprising 12 to 21 ring atoms at least 4 ethylene oxide units and optionally interrupted by one or more nitrogen atoms,
PEO being a chain comprising at least 4 ethylene oxide units and optionally interrupted by one or more nitrogen atoms,
And with the proviso that
(i) at least one of R¹, R², R³, R⁵ or R⁶ is -L6-Pol and at least one of R¹, R², R³, R⁵ or R⁶ is -L7-Cycle or -L8-PEO
or
(ii) at least one of R¹, R², R³, R⁵ or R⁶ is -L9-PEO- L10- Pol, -L11-Cycle-L12-Pol
- the metal cluster compound is represented by formula X⁺_{d}[M₆Qⁱ₈L^{a}₆]^{d-} wherein [M₆Qⁱ₈L^{a}₆]^{d-} is as defined above and X is a counter cation chosen from the group consisting of alkali metal cation, hydronium, and an ammonium, preferably chosen between Cs, Na, K, Li, H₃O, (nC₄H₉)₄N and NH₄, more preferably Cs.

9. The material according to claim 1 or 2, wherein said material is obtained by solubilizing in a solvent the polymer matrix, the organic compound and the metal cluster compound and evaporating the solvent,
wherein :
- the organic compound is represented by formula 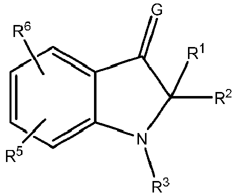
G is as defined above,
R¹ and R² are each independently selected from alkyl, aryl, alkenyl, alkynyl (such as propargyl), -O-C(=O)-CH=CH₂, -O-C(=O)-C(CH₃)=CH₂,
R¹ and R² may form together a cycloalkyl,
R³ is selected from H, alkyl, -C=Oalkyl, C=Oaryl, -CO₂alkyl, CO₂aryl,-SO₂alkyl, -SO₂aryl, alkenyl, alkynyl (such as propargyl), -O-C(=O)-CH=CH₂,-O-C(=O)-C(CH₃)=CH₂ and -SiY¹Y²Y³ wherein Y¹, Y² and Y³ are each independently selected from H, alkyl, alkoxy, cycloalkyl, aryl, aryloxy and aralkyl (for example -SiY¹Y²Y³ is -Si(CH₃)₃),
R⁵ and R⁶ represent each independently H, alkyl, aryl, heteroaryl, hydroxyl, amino, halo, haloalkyl (such as trifluoromethyl), haloalkylthio (such as perhaloalkylthio groups such as trifluoromethylthiolate -SCF₃), -O-C(=O)-CH=CH₂, -O-C(=O)-C(CH₃)=CH₂,
- the metal cluster compound is represented by formula X⁺_{d}[M₆Qⁱ₈L^{a}₆]^{d-} wherein [M₆Qⁱ₈L^{a}₆]^{d-} is as defined above and X is a counter cation chosen from the group consisting of alkali metal cation, hydronium, and an ammonium, preferably chosen between Cs, Na, K, Li, H₃O, (nC₄H₉)₄N or NH₄, more preferably Cs.

10. The material according to any one of claims 1 to 9, wherein the polymer-matrix is selected in the group consisting of polyamides, polycarbonates, polyolefins such as polyethylene, polyimides, polyacrylamides, poly(meth)acrylates such as polymethylmethacrylate (PMMA), styrenic polymers such as polystyrene, polyurethane, polyvinylchloride, polyester such as polyethylene naphtalate, polyethylene terephthalate,polylactic acid (PLA), poly(lactic-co-glycolic)acid (PLGA), polyacrylic acid, polyvinylalcohol, polyether such as polyethylene oxide (PEO), polyoxysilane such as polydimethylsiloxane (PDMS), cellulose ester such as cellulose acetate phthalate (CAP), alkylcellulose such as ethylcellulose and hydroxyalkylcellulose such as ethoxycellulose, preferably polymethylmethacrylate (PMMA) or polydimethylsiloxane (PDMS) or cellulose acetate phthalate (CAP), more preferably polymethylmethacrylate (PMMA).

11. The material according to any one of claims 1 to 9, wherein said polymer matrix is selected from the group consisting of PEO, crosslinked PEO-ureasil, crosslinked PEO-urethanesil, polymethylmethacrylate-poly(ethylene oxide) methacrylate (PMMA-PEOMA), polydimethylsiloxane-PEO (PDMS-PEO), polyvinylpyrrolidone-PEO (PVP-PEO), polyurethane-PEO (PU-PEO), polystyrene-PEO (PS-PEO), Polyethylene-PEO (PE-PEO) polyester-PEO (PES-PEO), polyamide-PEO, polycaprolactone-PEO, polyacrylamide-PEO, polylactic acid-PEO (PLA-PEO), Poly(lactic-co-glycolic)acid-PEO (PLGA-PEO), and mixtures thereof.

12. The material according to any one of claims 1 to 11, wherein the polymerizable group Pol is a group comprising a function chosen from the group consisting of: carbon-carbon double bond, carbon-carbon triple bond, an azide function, a (meth)acrylate function, acrylate function, an amine function, a carboxylic function, an aldehyde function, a hydroxyl function, an alkoxy function, an iodine atom, a bromine atom and a chlorine atom; more preferably a function chosen from the group consisting of an acrylate function (-O-C(=O)-CH=CH₂), a methacrylate function (-O-C(=O)-C(CH₃)=CH₂), a carbon-carbon double bond and carbon-carbon triple bond.

13. Use of the material according to any one of claims 1 to 12 for data recording, data storage, sensing, anticounterfeiting, optoelectronics or theranostic applications.

14. Use of the material according to any one of claims 1 to 12 in appliances selected from the group of display devices, polymeric matrix flat screens, LCD screens, photovoltaic cells, temperature detectors, gas sensors, pressure sensors, electroluminescent diodes, LASERs, active waveguides, and field effect transistors.
